(19) Europäisches Patentamt
European Patent Office
Office européen des brevets

(11) **EP 2 127 935 A2**

(12) **EUROPEAN PATENT APPLICATION**

(43) Date of publication:
**02.12.2009 Bulletin 2009/49**

(51) Int Cl.:
***B60L 11/18*** *(2006.01)*

(21) Application number: **09250528.8**

(22) Date of filing: **26.02.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **28.05.2008 JP 2008139115**

(71) Applicant: **Hitachi Ltd.**
**Chiyoda-ku**
**Tokyo 100-8280 (JP)**

(72) Inventors:
• **Shimada, Motomi**
**Tokyo 100-8220 (JP)**
• **Horie, Akira**
**Tokyo 100-8220 (JP)**
• **Kaneko, Takashi ,**
**Tokyo 100-8220 (JP)**
• **Sato, Yutaka**
**Tokyo 100-8220 (JP)**

(74) Representative: **Paget, Hugh Charles Edward et al**
**Mewburn Ellis LLP**
**33 Gutter Lane**
**London**
**EC2V 8AS (GB)**

(54) **Driving system for rail vehicles**

(57) The invention enables to control the currents charged to and discharged from respective power storage systems individually even if the properties such as the types, the ages and the power storage capacities of the means of energy storage constituting the power storage systems mounted in dispersed manner in multiple cars vary, to thereby equalize and elongate the replacement period and cut down the replacement work of the power storage systems. The present system provides a current control means to power lines provided to share power for driving power storage systems and inverter units mounted in dispersed manner among multiple cars so as to individually control the current being charged to and discharged from the respective power storage systems, wherein a specific power storage system out of the plurality of storage units mounted in dispersed manner to multiple cars controls a current control means so as to maintain the voltage value of a power line for sharing the power for driving inverter units among cars to a constant value, and the remaining power storage systems control the current control means so as to reduce or increase the charge-discharge power or current so that the dispersion of deterioration indexes of means of energy storage is minimized, and further, the specific power storage system selects a power storage system with a means of energy storage having a deterioration index closest to the average value.

FIG. 2

**Description**

BACKGROUND OF THE INVENTION

Field of the invention

The present invention relates to a driving system of a rail vehicle system, and more specifically, relates to the art of driving a railway car having a power generator means and a power storage means via the electric power generated by these means.

Description of the related art

Since railway cars travel via iron wheels rolling on railroad surfaces, it has smaller running resistance compared to automobiles. Especially, recent electric railway cars perform regenerative brake control in which braking force is obtained by utilizing a main electric motor as a generator during braking, and the electric energy generated in the main electric motor is returned to the overhead wire so that the energy can be reused as power running energy of other cars. The electric railway cars equipped with such regenerative brake system is capable of travelling via approximately half the energy consumption of electric railway cars without such regenerative brake system, and this system is considered an effective energy saving method taking advantage of railway cars having small running resistances.

On the other hand, regional train routes and the like having small transport density realize detailed customer services at a low cost by adopting diesel cars (DMU: Diesel Multiple Unit) that do not require overhead wires and substations. However, since diesel cars are not provided with any means such as overhead wires for handing over energy to other cars, there have not been any reuse of regenerative energy as in electric railway cars. Therefore, in order to realize energy saving in diesel cars, it was necessary to depend on the development of low fuel consumption engines.

Hybrid diesel cars (Hybrid DEMU: Diesel Electric Multiple Unit) adopting a combination of engines and power storage systems have been invented as a method for promoting energy saving in diesel cars. By providing power storage systems in hybrid diesel cars, it becomes possible to temporarily absorb the regenerative energy generated during braking in power storage systems, and to reuse the absorbed regenerative energy as a portion of the energy required during power running so as to save energy.

One of the issues of hybrid diesel cars is the energy management policy of power storage systems in a so-called train set. The driving system of the whole train set has a large capacity, but due to limitations of equipment mounting space, the individual equipments such as the engine, the power storage systems and the power converter units must be mounted in a dispersed manner to multiple cars in the train set. Therefore, it is important that the operations of the equipments dispersedly mounted in plural cars are appropriately controlled.

Especially, power storage systems generally utilize secondary batteries or capacitors. The lifetime of these devices are known to be affected mainly via parameters including the charge-discharge depth, the charge-discharge cycles, the charge-discharge power and the surrounding temperature. On the other hand, regarding the maintenance cycle (replacement period) of the power storage system, it is preferable for all the power storage systems to be subjected to maintenance operation collectively, considering the operation performance and work costs. In other words, if a plurality of power storage systems are mounted in a dispersed manner to multiple cars, it is advantageous from the viewpoint of life cycle management and maintenance management of the power storage systems to equalize the conditions of use of the plurality of power storage systems as much as possible.

The configuration and control method of a hybrid system in a train set is disclosed for example in Japanese patent application laid-open publication No. 2005-27447 (patent document 1). FIG. 12 shows a configuration diagram of a railway car driving system disclosed in patent document 1. In a railway car driving system comprising a first railway car 101 mounting a power generation means 110, a power converter 120, a driving motor and a power storage means 150, a second railway car 102 mounting a power converter 120, a drivingmotor and a power storage means 150, and a power transmission means 140 connecting the respective means, further comprising a power management means 200 for controlling the generation power of the power generation means 110 and a power storage quantity of the power storage means 150, wherein the power storage means 150 stores the power and regenerative power generated by the power generator means 110, and the driving motor is driven via the power converter 120 using the power generation means 110 and the power storage means 150 as power source to drive the train.

As disclosed, according to the railway car driving system disclosed in patent document 1, all the power storage means 50 mounted in a dispersed manner to multiple cars is connected via a power transmission means 40 so as to equalize the charge-discharge power depth, the charge-discharge cycle and charge-discharge power of all the power storage means 50.

In a configuration according for example to the driving system of the railway car disclosed in patent document

where the power storage systems are mounted in dispersed manner to multiple cars and having the output terminals of the power storage systems connected via a common power line, it is difficult to individually control the charge-discharge current of the respective power storage systems. Therefore, in order to equalize the replacement periods of the power storage systems, at least the following conditions must be fulfilled.

(1) The types of means of energy storage constituting the power storage systems are the same.
(2) The ages of use of the means of energy storage constituting the power storage systems are the same.
(3) The power storage capacities of the means of energy storage constituting the power storage systems are the same.

When the above conditions are not fulfilled, the output voltage of the respective power storage systems connected via a common power line are maintained equal, but the current values being charged or discharged differ among the respective power storage systems. Therefore, the states of deterioration of the power storage systems are dispersed, and the replacement timings thereof are also varied.

As described, in a series hybrid system of a train set, it is an important issue to equalize and maximize the replacement periods of the power storage systems even if properties such as types, ages and power storage capacities of the means of energy storage constituting the power storage systems mounted in dispersed manner in multiple cars differ.

SUMMARY OF THE INVENTION

The present invention aims at solving the problems of the prior art by providing a series hybrid system of a train set capable of individually controlling the current being charged and discharged in the respective power storage systems mounted in dispersed manner to multiple cars, thereby providing a driving system for rail vehicles in which the replacement periods of the power storage units become equal and long, even when the properties such as the types, the ages and the power storage capacities of the means of energy storage constituting the power storage systems differ.

According to the driving system for rail vehicles of the present invention, a current control means is disposed between the power lines for sharing the power of the power storage systems mounted in dispersed manner to multiple cars and the power for driving inverter units among cars, so as to enable the currents being charged and discharged to the respective power storage systems to be controlled individually. Further, a specific one power storage system out of the plurality of power storage systems mounted in dispersed manner to multiple cars controls the current controls means so as to maintain the voltage of the power line for sharing the power for driving the inverter units among cars to a constant value, and each of the remaining power storage systems controls the current control means so as to reduce the charge-discharge current when the deterioration index of a power storage medium is greater than an average value and to increase the charge-discharge current when the deterioration index of a power storage medium is smaller than the average value so as to minimize the dispersion in the deterioration indexes of means of energy storage, wherein the specific one power storage system selects a power storage system with means of energy storage having a deterioration index closest to the average value.

The effects of the present invention are as follows.

The present invention provides a series hybrid system of a train set capable of individually controlling the current being charged and discharged in the respective power storage systems mounted in dispersed manner to multiple cars, thereby providing a driving system for rail vehicles in which the replacement periods of the power storage systems become equal and long, even when the properties such as the types, the ages and the power storage capacities of the means of energy storage constituting the power storage systems differ.

BRIEF DESCRIPTION OF THE DRAWINGS

FIG. 1 is a view showing a configuration of a driving system of an electric train according to a first embodiment of the present invention;
FIG. 2 is a view showing the details of the configuration of the driving system of an electric train according to the first embodiment of the present invention;
FIG. 3 is a view showing a control method of the driving system of an electric train according to the first embodiment of the present invention;
FIG. 4 is a view showing the control operation of the driving system of an electric train according to the first embodiment of the present invention;
FIG. 5 is a view showing the configuration of a driving system of an electric train according to a second embodiment of the present invention;

FIG. 6 is a view showing the details of the configuration of the driving system of an electric train according to the second embodiment of the present invention;

FIG. 7 is a view showing a control method of the driving system of an electric train according to the second embodiment of the present invention;

FIG. 8 is a view showing the control operation of the driving system of an electric train according to the second embodiment of the present invention;

FIG. 9 is a view showing the configuration of a driving system of an electric train according to a third embodiment of the present invention;

FIG. 10 is a view showing the details of the configuration of the driving system of an electric train according to the second embodiment of the present invention;

FIG. 11 is a view showing a control method of the driving system of an electric train according to the third embodiment of the present invention; and

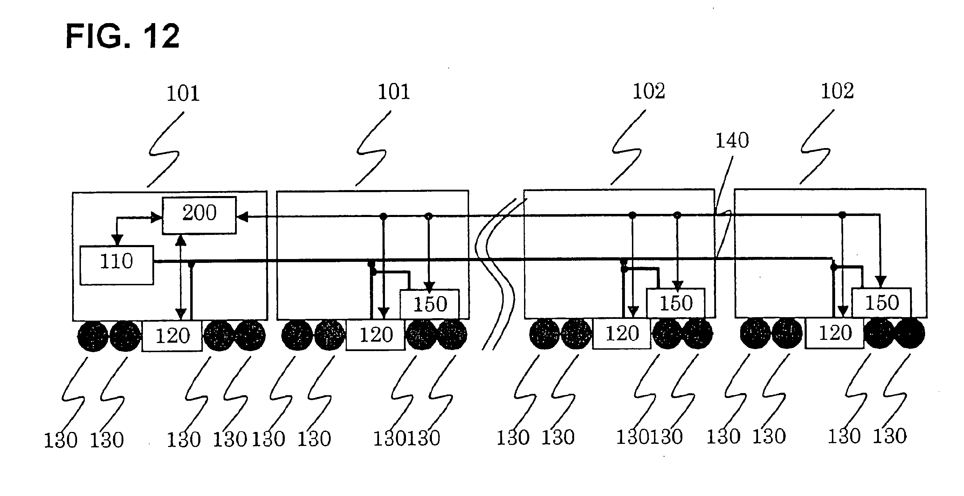

FIG. 12 is a view showing a railway car driving system according to the prior art.

DETAILED DESCRIPTION OF THE PREFERRED EMBODIMENTS

Now, the preferred embodiments for carrying out the present invention will be described with reference to the drawings.

[EMBODIOMENT 1]

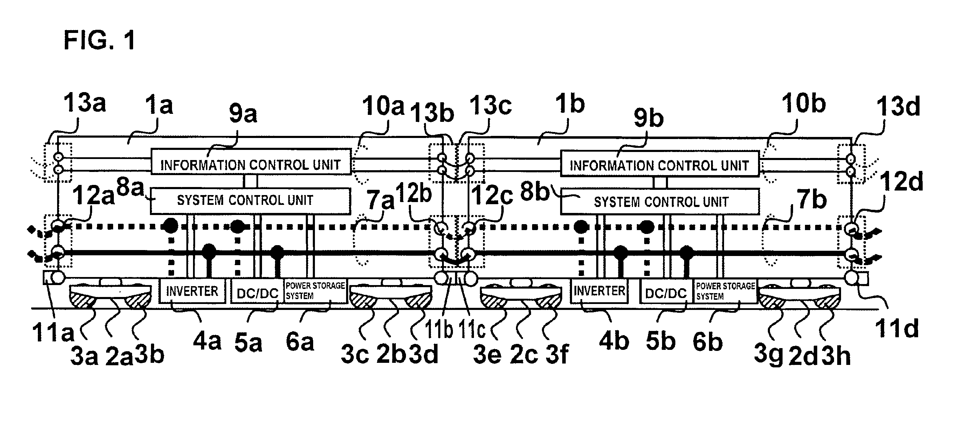

FIG. 1 is a view showing the configuration of a driving system of an electric train according to one preferred embodiment of the present invention. Cars 1a and 1b are a portion of the car constituting a train set. Car 1a is equipped with inter-car couplers 11a and 11b, and car 1b is equipped with inter-car couplers 11c and 11d, wherein the cars 1a and 1b are connected to each other via inter-car coupler 11b and inter-car coupler 11c.

Car 1a is supported on a rail surface not shown via a truck 2a and wheel sets 3a and 3b, and via a truck 2b and wheel sets 3c and 3d. Similarly, car 1b is supported on a rail surface not shown via a truck 2c and wheel sets 3e and 3f, and via a truck 2d and wheel sets 3g and 3h.

At first, we will describe the configuration of car 1a. Car 1a has arranged therein an inverter unit 4a, a DC/DC converter unit 5a, a power storage system 6a, a system control unit 8a, and an information control unit 9a. The inverter unit 4a receives DC power supplied via a power transmission means 7a, converts the same into three phase alternating power, and drives an electric motor 36 not shown. The output of the electric motor 36 is transferred via a power transmission means not shown to drive any or all of the wheel sets 3a, 3b, 3c and 3d to provide accelerating and decelerating force to the car 1a.

The DC/DC converter unit 5a has a function to enable conduction of current according to the respective input-side and output-side terminal voltages, when the terminal voltages of the input-side and output-side terminals differ. In the present embodiment, the high-voltage-side terminal is connected to the power transmission means 7a, and the low-voltage-side terminal is connected to the power storage system 6a. In other words, the DC/DC converter unit 5a can charge power from the power transmission means 7a to the power storage system 6a, or discharge the power storage system 6a and return the power to the power transmission means 7a.

The system control unit 8a can be connected to the inverter unit 4a, the DC/DC converter unit 5a and the power storage system 6a, respectively providing control demands Dinv_a, Dchp_a and Dbtr_a to each unit, and aggregating the status information Sinv_a, Schp_a and Sbtr_a of the respective units. Further, the system control unit 8a sends the information Dinf_a received from the inverter unit 4a, the DC/DC converter unit 5a and the power storage system 6a to the information control unit 9a, where the information control unit 9a can share the information with information control units 9b of other cars within the train set via information transmission means 10a and 10b. In other words, the overall information of the train can be collected at the information control unit 9a, and the system control unit 8a selects and receives the necessary information Sinf_a for controlling the inverter unit 4a, the DC/DC converter unit 5a, and the power storage system 6a. Further, the car 1a is equipped with couplers 12a and 12b for electric power transfer to connect the power transmission means 7a with other cars within the train set, and couplers 13a and 13b for information transfer to connect the information transmission means 10a with other cars within the train set.

Next, we will describe the configuration of car 1b. Car 1b has arranged therein an inverter unit 4b, a DC/DC converter unit 5b, a power storage system 6b, a system control unit 8b, and an information control unit 9b. The inverter unit 4b receives DC power supplied via a power transmission means 7b, converts the same into three phase alternating power, and drives an electric motor 36 not shown. The output of the electric motor 36 is transferred via a power transmission means not shown to drive any or all of the wheel sets 3e, 3f, 3g and 3h to provide accelerating and decelerating force to the car 1b.

The DC/DC converter unit 5b has a function to enable conduction of current according to the respective input-side and output-side terminal voltages, when the terminal voltages of the input-side and output-side terminals differ. In this embodiment, the high-voltage-side terminal is connected to the power transmission means 7b, and the low-voltage-side terminal is connected to the power storage system 6b. In other words, the DC/DC converter unit 5b can charge the power of the power transmissionmeans 7b to the power storage system 6b, or discharge the power storage system 6b and return the power to the power transmission means 7b.

The system control unit 8b can be connected to the inverter unit 4b, the DC/DC converter unit 5b and the power storage system 6b, respectively providing control demands Dinv_a, Dchp_a and Dbtr_a to each unit, and aggregating the status information Sinv_b, Schp_b and Sbtr_b of the respective units. Further, the system control unit 8b sends the information Dinf_b received from the inverter unit 4b, the DC/DC converter unit 5b and the power storage system 6b to the information control unit 9b, where the information control unit 9b can share the information with information control units 9a of other cars within the train set via information transmission means 10a and 10b. In other words, the overall information of the train can be collected at the information control unit 9b, and the system control unit 8b selects and receives the necessary information Sinf_b for controlling the inverter unit 4b, the DC/DC converter unit 5b, and the power storage system 6b. Further, the car 1b is equipped with couplers 12a and 12b for electric power transfer to connect the power transmission means 7b with other cars within the train set, and couplers 13a and 13b for information transfer to connect the information transmission means 10a with other cars within the train set.

As described, according to the present configuration, the status information such as type, state of deterioration, power storage quantity and temperature of the power storage systems 6a and 6b can be shared via the system control units 8a, 8b and the information control units 9a, 9b. Based on this shared information, it becomes possible to control the charge-discharge current of the power storage systems 6a and 6b controlled via the DC/DC converter units 5a and 5b. In other words, the present invention provides a series hybrid system of a train set capable of individually controlling the current being charged and discharged in the respective power storage systems mounted in dispersed manner to multiple cars, thereby providing a driving system for rail vehicles in which the replacement periods of the power storage device become equal and long, even when the properties such as the types, the ages and the power storage capacities of the means of energy storage constituting the power storage systems differ.

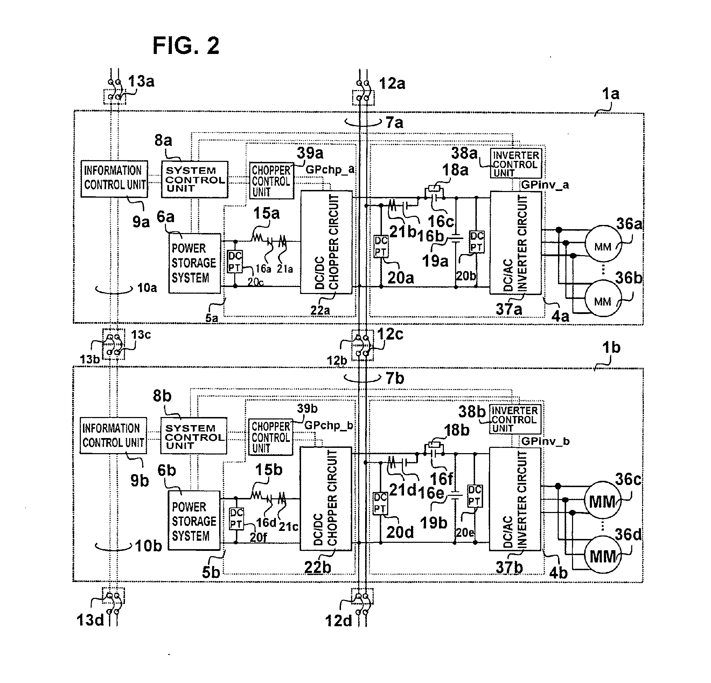

FIG. 2 is a view showing the details of the configuration of a driving system of an electric train according to the first embodiment of the present invention. Cars 1a and 1b are portions of the cars constituting the train set. The car 1a is equipped with an inverter unit 4a, electric motors 36a and 36b, a DC/DC converter 5a, a power storage system 6a, a system control unit 8a, and an information control unit 9a.

The inverter unit 4a receives the DC power supplied from a power transmission means 7a, converts the same into three phase alternating power, and drives the electric motors 36a and 36b. In the present embodiment, electric motors 36a and 36b are illustrated as the motors driven by the inverter unit 4a, but this is not meant to restrict the number of electric motors driven by the inverter unit 4a. A line breaker 16b is arranged on a DC link connecting the power transmission means 7a and the inverter circuit 37a at a side close to the power transmission means 7a, and functions to disconnect the power supply from the power transmission means 7a to the DC link. Further, a line breaker 16c is disposed at a side close to the inverter circuit 37 of the DC link. A charge resistor 18a connected in parallel to the line breaker 16c functions to prevent current from flowing in drastically when a filter condenser 19a connected in parallel to the input end of the inverter circuit 37a is charged via the DC power supplied from the power transmission means 7a or via a power storage system 6a mentioned later. An inverter circuit 37a converts the power of the above-mentioned DC link to a voltage-variable and frequency-variable three phase alternating power by controlling a switching device not shown based on a switching signal GPinv_a output from an inverter control unit 39a, so as to drive the electric motors 36a and 36b. Further, a voltage detector 20a for measuring the supplied voltage from the power supply means 7a, a current detector 21b for measuring the supplied current, and a voltage detector 20b for measuring the inter-terminal voltage of the filter condenser 19a are arranged.

The DC/DC converter unit 5a has a function to conduct current according to the input-side and output-side terminal voltages, even if the input-side and output-side terminal voltages differ. Here, the high-voltage-side terminal is connected via the aforementioned line breaker 16b to the power transmission means 7a, and the low-voltage-side terminal is connected to the power storage system 6a. A smoothing reactor 15a is connected between the power storage system 6a and a chopper circuit 24a, and functions to smoothen the chopper current during a step up and down chopper described later and to temporarily store the electric energy during the rising pressure chopping operation. The line breaker 16a functions to interrupt the power supply from the power storage system 6a to the chopper circuit 22a.

The chopper circuit 22a conducts current while maintaining or controlling the inter-terminal voltage between a high-voltage-side terminal connected to the power transmission means 7a and the low-voltage-side terminal connected to the power storage system 6a by controlling a switching device not shown based on a switching signal GPchp_a output by the chopper control unit 38a. Further, a current detector 21a for detecting the supplied current from the power storage system 6a is disposed between the power storage system 6a and the chopper circuit 22a, and a voltage measure 20c for measuring the output voltage of the power storage system 6a between the output terminals of the power storage system 6a. In other words, the DC/DC converter unit 5a can charge power from the power transmission means 7a to the power storage system 6a, or return the discharged power of the power storage system 6a to the power transmission means 7a.

The system control unit 8a can be connected to the inverter unit 4a, the DC/DC converter unit 5a and the power storage system 6a, respectively providing control demands Dinv_a, Dchp_a and Dbtr_a to each unit, and aggregating the status information Sinv_a, Schp_a and Sbtr_a of the respective units. Further, the system control unit 8a sends the information Dinf_a received from the inverter unit 4a, the DC/DC converter unit 5a and the power storage system 6a to the information control unit 9a, where the information control unit 9a can share the information with information control units 9b of other cars within the train set via information transmission means 10a and 10b. In other words, the overall information of the train can be collected at the information control unit 9a, and the system control unit 8a selects and receives the necessary information Sinf_a for controlling the inverter unit 4a, the DC/DC converter unit 5a, and the power storage system 6a. Further, the car 1a is equipped with couplers 12a and 12b for electric power transfer to connect the power transmission means 7a with other cars within the train set, and couplers 13a and 13b for information transfer to connect the information transmission means 10a with other cars within the train set.

Car 1b has arranged therein an inverter unit 4b, electric motors 36c and 36d, a DC/DC converter unit 5b, a power storage system 6b, a system control unit 8b, and an information control unit 9b. The inverter unit 4b receives DC power supplied via a power transmission means 7b, converts the same into three phase alternating power, and drives the electric motors 36c and 36d. In the present embodiment, electric motors 36c and 36d are illustrated as the motors driven by the inverter unit 4b, but this example is not meant to restrict the number of electric motors driven by the inverter unit 4b. A line breaker 16b is arranged on a DC link connecting the power transmission means 7b and the inverter unit 4b at a side close to the power transmission means 7b, and functions to disconnect the power supply from the power transmission means 7b to the DC link. Further, the line breaker 16e is disposed at a side close to the inverter unit 4b of the DC link. A charge resistor 18b connected in parallel to the line breaker 16f functions to prevent current from flowing in drastically when a filter condenser 19b connected in parallel to the input end of the inverter circuit 37b is charged via the DC power supplied from the power transmission means 7b or via a power storage system 6b mentioned later. The inverter circuit 37b converts the power of the above-mentioned DC link to a voltage-variable and frequency-variable three phase alternating power by controlling a switching device not shown based on a switching signal GPinv_b output from an inverter control unit 39b, so as to drive the electric motors 36c and 36d. Further, a voltage detector 20d for measuring the supplied voltage from the power supply means 7b, a current detector 21d for measuring the supplied current, and a voltage detector 20e for measuring the inter-terminal voltage of the filter condenser 19b are arranged.

The DC/DC converter unit 5b has a function to conduct current corresponding to the input-side and output-side terminal voltages, even if the input-side and output-side terminal voltages differ. Here, the high-voltage-side terminal is connected via the aforementioned line breaker 16e to the power transmission means 7b, and the low-voltage-side terminal is connected to the power storage system 6b. A smoothing reactor 15b is connected between the power storage system 6b and a chopper circuit 24b, which functions to smoothen the chopper current during a step up and down chopper described later and to temporarily store the electric energy during the rising pressure chopping operation. The line breaker 16d functions to interrupt the power supply from the power storage system 6b to the chopper circuit 22b. The chopper circuit 22b conducts current while maintaining or controlling the inter-terminal voltage between a high-voltage-side terminal connected to the power transmission means 7b and the low-voltage-side terminal connected to the power storage system 6b by controlling a switching device not shown based on a switching signal GPchp_b output from the chopper control unit 38b. Further, a current detector 21b for detecting the supplied current from the power storage system 6b is disposed between the power storage system 6b and the chopper circuit 22b, and a voltage measure 20f for measuring the output voltage of the power storage system 6b is disposed between the output terminals of the power storage system 6b. In other words, the DC/DC converter unit 5b can charge power to the power storage system 6b based on the power of the power transmission means 7b, or return the discharged power of the power storage system 6b to the power transmission means 7b.

The system control unit 8b can be connected to the inverter unit 4b, the DC/DC converter unit 5b and the power storage system 6b, respectively providing control demands Dinv_b, Dchp_b and Dbtr_b to each unit, and aggregating the status information Sinv_b, Schp_b and Sbtr_b of the respective units. Further, the system control unit 8b sends the information Dinf_b received from the inverter unit 4b, the DC/DC converter unit 5b and the power storage system 6b to the information control unit 9b, where the information control unit 9b can share information with information control units 9a of other cars within the train set via information transmission means 10a and 10b. In other words, the overall information of the whole train can be collected at the information control unit 9b, and the system control unit 8b selects and receives the necessary information Sinf_b for controlling the inverter unit 4b, the DC/DC converter unit 5b, and the power storage system 6b. Further, the car 1b is equipped with couplers 12c and 12d for electric power transfer to connect the power transmission means 7b with other cars within the train set, and couplers 13c and 13d for information transfer to connect the information transmission means 10b with other cars within the train set.

As described, according to the present configuration, the status information such as types, states of deterioration, power storage quantities and temperatures of the power storage systems 6a and 6b can be shared via the system control units 8a and 8b and the information control units 9a and 9b. Based on this shared information, it becomes possible to control the charge-discharge current of the power storage systems 6a and 6b controlled via the DC/DC converter units 5a and 5b. In other words, the present invention provides a series hybrid system of a train set capable of individually controlling the current being charged and discharged in the respective power storage systems mounted in a dispersed manner in multiple cars, thereby providing a driving system for rail vehicles in which the replacement periods of the power storage systems become equal and long, even when the properties such as the types, the ages and the power storage capacities of the means of energy storage constituting the power storage systems differ.

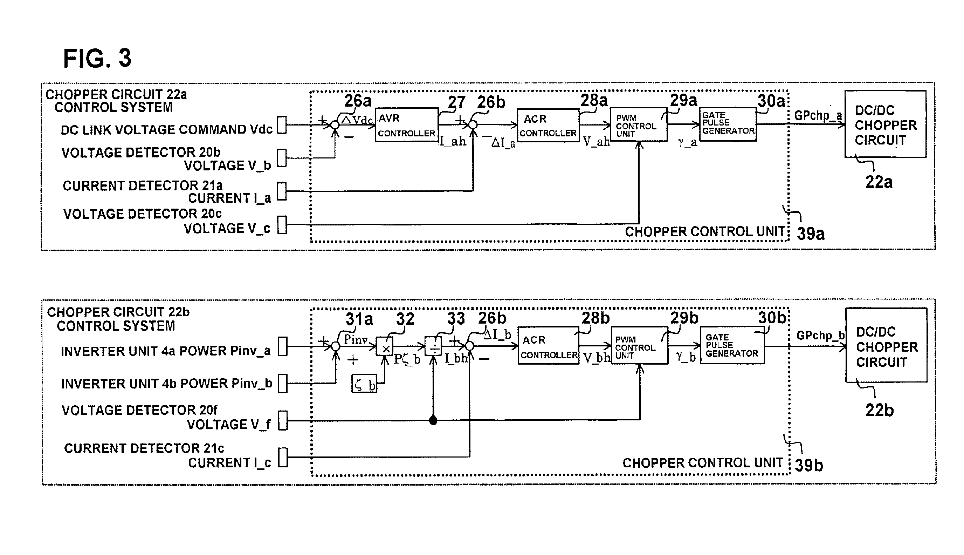

FIG. 3 is a view illustrating a device control system of the driving system of an electric train according to one preferred embodiment of the present invention. At first, we will describe the control system of a chopper circuit 22a. The chopper circuit 22a realizes a "charging and discharging control with AVR (Automatic Voltage Regulator) function" for controlling the charging and discharging of the power storage system 6a so that a DC link voltage, that is, the voltage between both ends of a filter condenser 19a, follows the DC link voltage command Vdc.

The DC link voltage command Vdc is determined by the system control unit 8a, and transmitted as an information on the control demand Dchp_a for the chopper control unit from the system control unit 8a. A voltage difference $\Delta$Vdc is computed by subtracting the DC link voltage command Vdc and the voltage V_b of the voltage detector 20b in a subtractor 26a. An AVR controller 27 receives the aforementioned voltage difference $\Delta$Vdc as input, and computes a current command I_ah to be conducted to the low-pressure-side of the chopper circuit 22a so as to converge the voltage difference to zero. A current difference $\Delta$I_a is computed by subtracting the current command I_ah and the current I_a of the current detector 21a in a subtractor 26b. The ACR (Automatic Current Regulator) controller 28a receives the aforementioned current difference $\Delta$I_a as input, and computes a voltage command V_ch for regulating the low-pressure-side voltage of the chopper circuit 22a necessary to converge the current difference to zero. A PWM control unit 29a receives the aforementioned voltage command V_ch and the voltage V_b of the voltage detector 20b as input, and computes a conduction ratio $\gamma$_a for driving the chopper circuit. A gate pulse generator 30a receives the conduction ratio $\gamma$_a as input and computes a corresponding gate pulse GPchp_a to drive the chopper circuit 22a. According to the above-mentioned control system, the chopper circuit 22a realizes a constant voltage control to enable the DC link voltage or voltage between both ends of the filter condenser 19a to follow the CD section voltage command Vdc.

Next, we will describe the control system of the chopper circuit 22b. The chopper circuit 22b realizes a "charge-discharge control with APR (Automatic Power Regulator) function" for controlling the charge-discharge power of the power storage system 6b according to the consumption power of the inverter units 4a and 4b. A total consumption power Pinv of the inverter units 4a and 4b is computed by adding a power Pinv_a of the inverter unit 4a and a power Pinv_b of the inverter unit 4b in an adder 31a. By multiplying the total consumption power Pinv by a power burden ratio $\zeta$_b of the inverter unit 4b in a multiplier 32, a conversion power P$\zeta$_b to be borne by the chopper circuit 22b is obtained.

Here, the power burden ratio $\zeta$_b is computed by the following equation based on a deterioration index SOH_a of the power storage system computed by the information from the power storage system 6a and a deterioration index SOH_b of the power storage system computed by the information from the power storage system 6b.

$$\zeta\_b \ = \ (1-SOH\_b)/(SOH\_a \ + \ SOH\_b)$$

That is, by assigning the charge-discharge powers of the power storage systems 6a and 6b so as to suppress the charge-discharge power of the power storage system having a higher deterioration degree based on deterioration indexes SOH_a and SOH_b, the power storage systems are controlled so that the deterioration degrees thereof eventually become equal.

A current command I_ch to be conducted to the low-pressure-side of the chopper circuit 22b is computed by dividing a conversion power P $\zeta$_ b to be borne by the chopper circuit 22b by the voltage V_f of the voltage detector 20f in a divider 33. A current difference $\Delta$I_c is computed by subtracting the current command I_ch and the current I_c of the current detector 21c in a subtractor 26c. The ACR controller 28b receives the aforementioned current difference $\Delta$I_c as input, and computes a voltage command V_fh for regulating the low-pressure-side voltage of the chopper circuit 22b necessary to converge the current difference to zero. A PWM control unit 29b receives the aforementioned voltage command V_fh and the voltage V_e of the voltage detector 20e as input, and computes a conduction ratio $\gamma$_b for driving the chopper circuit. Agate pulse generator 30b receives the conduction ratio $\gamma$_b as input and computes a corresponding gate pulse GPchp_b so as to drive the chopper circuit 22b.

The difference between the total consumption power Pinv of the inverter units 4a and 4b and the conversion power P$\zeta$_b borne by the chopper unit 22b is absorbed by the "charging and discharging control with AVR function" performed by the aforementioned chopper circuit 22a. This is because in the chopper circuit 22a, the DC link voltage or voltage between both ends of the filter condenser 19a is controlled to follow the DC link voltage command Vdc to realize constant-voltage control, the current flowing through the chopper circuit 22a is automatically determined based on the difference between the total consumption power Pinv of the inverter units 4a and 4b and the conversion power Pζ_b borne by the chopper unit 22b.

As described, according to the present configuration, the chopper circuit 22a performs control of the charge-discharge power of the power storage system 6a so that the DC link voltage or voltage between both ends of the filter condenser 19a follows the CD section voltage command Vdc, and on the other hand, the chopper circuit 22b controls the charge-discharge power of the power storage system 6b according to the consumption powers Pinv_a and Pinv_b of the inverter units 4a and 4b. Here, the charge-discharge power of the power storage system 6b is controlled according to the types, the states of deterioration, the power storage quantities, the temperatures and the like of the power storage systems 6a and 6b, and further, the charge-discharge power of the power storage system 6a can also be indirectly controlled via the differences of the consumption power of the inverter units 4a and 4b and the charge-discharge power of the power storage system 6b.

In other words, the present invention provides a series hybrid system of a train set capable of individually controlling the current being charged and discharged in the respective power storage systems mounted in a dispersed manner in multiple cars, thereby providing a driving system for rail vehicles in which the replacement periods of the power storage devices become equal and long, even when the properties such as the types, the ages and the power storage capacities of the means of energy storage constituting the power storage systems differ.

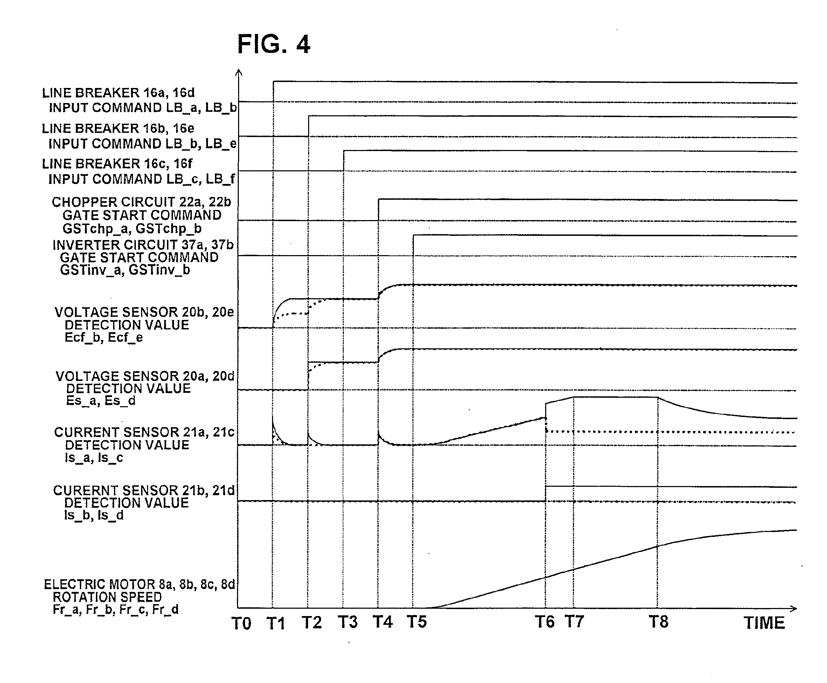

FIG. 4 is a view showing the control operation of a driving system of an electric train according to the first embodiment of the present invention. In FIG. 4, the horizontal axis shows time, and the vertical axis shows the behavior of respective signals of input demands LB_a, LB_b, LB_c, LB_d, LB_e and LB_f of line breakers 16a, 16b, 16c, 16d, 16e and 16f, gate start commands GSTchp_a, GSTchp_b of chopper circuits 22a and 22b, gate start commands GSTinv_a and GSTinv_b of inverter circuits 37a and 37b, detected vlues Es_a, Es_b, Es_c and Es_d of voltage sensors 20a, 20b, 20c and 20d, detected values Is_a, Is_b, Is_c and Is_d of current sensors 21a, 21b, 21c and 21d, and rotational speeds Fr_a, Fr_b, Fr_c and Fr_d of electric motors 8a, 8b, 8c and 8d.

At time T0, the car is at a stopped state, and all the signals are at zero position. At this time, the voltage values of detected values Ecf_band Ecf_e of voltage sensors 20b and 20e corresponding to the high-voltage-side voltage of chopper circuits 22a and 22b are also zero. At time T1, the line breaker 16a input command LB_a and the line breaker 16d input command LB_d are set to "1". Thereby, the line breakers 16a and 16d are input, and power is supplied from the power storage system 6a to the chopper circuit 22a and from the power storage system 6d to the chopper circuit 22b. Now, the output voltage of the power storage systems 6a and 6b are greater than the both end voltages of filter condensers 19a and 19b. Therefore, the filter condenser 19a is charged via a charge resistor 18a until the output voltage of the power storage system 6a becomes equal to the voltage of the filter condenser 19a, and the filter condenser 19b is charged via a charge resistor 18b until the output voltage of the power storage system 6b becomes equal to the voltage of the filter condenser 19b.

FIG. 4 illustrates a case where the output voltage of the power storage system 6a becomes greater than the output voltage of the power storage system 6b due to reasons such as the power storage quantity of the power storage system 6a being greater than the power storage quantity of the power storage system 6b. At this time, the voltage value Ecf_a (solid line) after charging the filter condenser 19a is greater than the voltage value Ecf_e (dashed line) after charging the filter condenser 19b. Further, the current Is_a (dashed line) flowing in the current sensor 21a during the process of charging the filter condenser 19a is greater than the current Is_c (solid line) flowing in the current sensor 21c during the process of charging the filter condenser 19b.

At time T2, the line breaker 16b input command LB_b and the line breaker 16e input command LB_e are set to "1". Thereby, the line breakers 16b and 16e are input, and the DC link connecting the chopper circuit 22a and the inverter circuit 37a and the DC link connecting the chopper circuit 22b and the inverter circuit 37b are connected via the power transmission means 7a and the power transmission means 7b, respectively. Thus, the power storage system 6a is discharged until the voltages Ecf_b and Ecf_e of the aforementioned two DC links becomes equal, and current Is_a flows through the current sensor 21a.

At time T3, the line breaker 16c input command LB_c and the line breaker 16f input command LB_f are set to "1". Thereby, the line breakers 16c and 16f are input. At this time, since the line breakers 16c and 16f are input when no current is flowing to the charge resistors 18a and 18b respectively connected in parallel to the line breakers 16c and 16f, the current quantity of each section will not be changed by the input of line breakers 16c and 16f.

At time T4, the gate start commands GSTchp_a and GSTchp_b of chopper circuits 22a and 22b are set to "1". Thereby, the chopper unit 22a starts a pressure-rise chopping operation, and the voltage value Ecf_b of the DC link connecting the chopper circuit 22a and the inverter circuit 37a is controlled so as to follow a predetermined target voltage value. On the other hand, the chopper unit 22b also starts a pressure-rise chopping operation, and the power flowing into the DC link from the chopper circuit 22b is controlled to follow a predetermined target power value corresponding to the voltage value Ecf_e (=Ecf_b) of the DC link connecting the chopper circuit 22b and the inverter circuit 37b.

At time T5, the gate start command GSTchp_a and GSTchp_b of the inverter units 4a and 4b are set to "1". Thereby, the electric motors 8a, 8b, 8c and 8d start to rotate, and the rotational speeds Fr_a, Fr_b, Fr_c and Fr_d start to increase.

At time T6, a state is shown where discharge power is restricted since the power storage quantity of the power storage system 6b is reduced to a predetermined value. At this time, since a power corresponding to the discharge power restricted in the power storage system 6b is added to the discharge power of the power storage system 6a, even after the elapse of a constant torque section terminal speed V7 (time T7) and a constant power section terminal speed V8 (time T8), the electric motors 8a, 8b, 8c and 8d continue to accelerate while maintaining a predetermined torque performance.

[Embodiment 2]

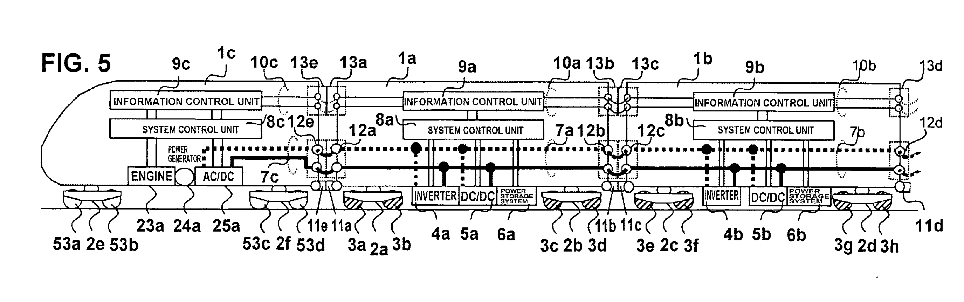

FIG. 5 is a view showing the configuration of a driving system of an electric train according to a second preferred embodiment of the present invention. Cars 1a, 1b and 1c are a portion of the car constituting a train set. Car 1a is equipped with inter-car couplers 11a and 11b, car 1b is equipped with inter-car couplers 11c and 11d, and car 1c is equipped with an inter-car coupler 11e, wherein cars 1a and 1b are connected to each other via inter-car coupler 11b and inter-car coupler 11c, and cars 1a and 1c are connected via inter-car coupler 11a and inter-car coupler 11e.

Car 1a is supported on a rail surface not shown via a truck 2a and wheel sets 3a and 3b, and via a truck 2b and wheel sets 3c and 3d. Similarly, car 1b is supported on a rail surface not shown via a truck 2c and wheel sets 3e and 3f, and via a truck 2d and wheel sets 3g and 3h. Further, car 1c is supported on a rail surface not shown via a truck 2e and wheel sets 53a and 53b, and via a truck 2f and wheel sets 53c and 53d.

At first, we will describe the configuration of car 1a. Car 1a has arranged therein an inverter unit 4a, a DC/DC converter 5a, a power storage system 6a, a system control unit 8a, and an information control unit 9a. The inverter unit 4a receives DC power supplied from a power transmission means 7a, converts the same into three phase alternating power, and drives an electric motor 36 not shown. The output of the electric motor 36 is transferred via a power transmission means not shown to drive any or all of the wheel sets 3a, 3b, 3c and 3d to provide accelerating and decelerating force to the car 1a.

The DC/DC converter unit 5a has a function to enable conduction of current according to the respective input-side and output-side terminal voltages, when the terminal voltages of the input-side and output-side terminals differ. In the present embodiment, the high-voltage-side terminal is connected to the power transmission means 7a, and the low-voltage-side terminal is connected to the power storage system 6a. In other words, the DC/DC converter unit 5a can charge power from the power transmission means 7a to the power storage system 6a, or discharge the power storage system 6a and return the power to the power transmission means 7a.

The system control unit 8a can be connected to the inverter unit 4a, the DC/DC converter unit 5a and the power storage system 6a, respectively providing control demands Dinv_a, Dchp_a and Dbtr_a to each unit, and aggregating the status information Sinv_a, Schp_a and Sbtr_a of the respective units. Further, the system control unit 8a sends the information Dinf_a received from the inverter unit 4a, the DC/DC converter unit 5a and the power storage system 6a to the information control unit 9a, where the information control unit 9a can share the information with information control units 9b of other cars within the train set via information transmission means 10. In other words, the overall information of the train can be collected at the information control unit 9a, and the system control unit 8a selects and receives the necessary information Sinf_a for controlling the inverter unit 4a, the DC/DC converter unit 5a and the power storage system 6a. Further, the car 1a is equipped with couplers 12a and 12b for electric power transfer to connect the power transmission means 7a with other cars within the train set, and couplers 13a and 13b for information transfer to connect the information transmission means 10a with other cars within the train set.

Next, we will describe the configuration of car 1b. Car 1b has arranged therein an inverter unit 4b, a DC/DC converter unit 5b, a power storage system 6b, a system control unit 8b, and an information control unit 9b. The inverter unit 4b receives DC power supplied via a power transmission means 7b, converts the same into three phase alternating power, and drives an electric motor 36 not shown. The output of the electric motor 36 is transferred via a power transmission means not shown to drive any or all of the wheel sets 3e, 3f, 3g and 3h to provide accelerating and decelerating force to the car 1b.

The DC/DC converter unit 5b has a function to enable conduction of current according to the respective input-side and output-side terminal voltages, when the terminal voltages of the input-side and output-side terminals differ. In this embodiment, the high-voltage-side terminal is connected to the power transmission means 7b, and the low-voltage-side terminal is connected to the power storage system 6b. In other words, the DC/DC converter unit 5b can charge the power of the power transmissionmeans 7b to the power storage system 6b, or discharge the power storage system 6b and return the power to the power transmission means 7b.

The system control unit 8b can be connected to the inverter unit 4b, the DC/DC converter unit 5b and the power storage system 6b, respectively providing control demands Dinv_b, Dchp_b and Dbtr_b to each unit, and aggregating the status information Sinv_b, Schp_b and Sbtr_b of the respective units. Further, the system control unit 8b sends the information Dinf_b received from the inverter unit 4b, the DC/DC converter unit 5b and the power storage system 6b to the information control unit 9b, where the information control unit 9b can share the information with information control units 9a of other cars within the train set via information transmission means 10a and 10b. In other words, the overall information of the train can be collected at the information control unit 9b, and the system control unit 8a selects and receives the necessary information Sinf_a for controlling the inverter unit 4a, the DC/DC converter unit 5b and the power storage system 6b. Further, the car 1b is equipped with couplers 12c and 12d for electric power transfer to connect the power transmission means 7b with other cars within the train set, and couplers 13c and 13d for information transfer to connect the information transmission means 10b with other cars within the train set.

Next, we will describe the configuration of car 1c. Car 1c has arranged therein an engine 23, a power generator 24, an AC/DC converter 25, a system control unit 8c and an information control unit 9c. The power generator 24 is driven via the engine 23 to generate three phase alternating power. The three phase alternating power is converted into DC power via an AC/DC converter unit 25, and transmitted to other cars 1a and 1b within the train set via a power transmission means 7c.

The system control unit 8c can be connected to the engine 23 and the AC/DC converter unit 25, respectively providing control demands Deng_c and Dcnv_c to each unit, and aggregating the status information Seng_c and Scnv_c of the respective units. Further, the system control unit 8c sends the information Dinf_c received from the engine 23 and the AC/DC converter unit 25 to the information control unit 9c. The information control unit 9c can share information with information control units 9a and 9b of other cars within the train set via information transmission means 10c. In other words, the overall information of the train can be collected at the information control unit 9c, and the system control unit 8c selects and receives the necessary information Scnv_c for controlling the engine 23 and the AC/DC converter unit 25. Further, the car 1c is equipped with a coupler 12e for electric power transfer to connect the power transmission means 7a with other cars within the train set, and a coupler 13e for information transfer to connect the information transmission means 10c with other cars within the train set.

As described, according to the present configuration, the status information such as type, state of deterioration, power storage quantity and temperature of the power storage systems 6a and 6b can be shared via the system control units 8a, 8b and 8c and the information control units 9a, 9b and 9c. Based on this shared information, it becomes possible to control the charge-discharge current of the power storage systems 6a and 6b controlled via the DC/DC converter units 5a and 5b, and the power generation current controlled via the AC/DC converter unit 25. In other words, the present invention provides a series hybrid system of a train set capable of individually controlling the current being charged and discharged in the respective power storage systems mounted in a dispersed manner to multiple cars, thereby providing a driving system for rail vehicles in which the replacement period of the power storage device becomes equal and long even when the properties such as the types, the ages and the power storage capacities of the means of energy storage constituting the power storage systems differ.

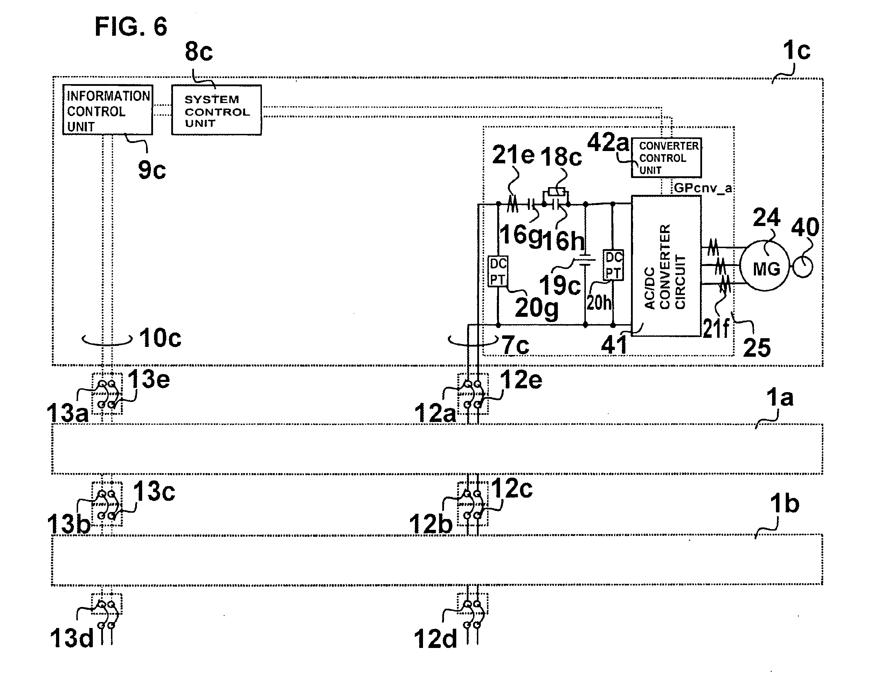

FIG. 6 is a view showing the details of the configuration of a driving system of an electric train according to a second embodiment of the present invention. Cars 1a, 1b and 1c are portions of the cars constituting the train set. The configurations of cars 1a and 1b are omitted from the present drawing since they are the same as those illustrated in detail with respect to the configuration of the driving system of the electric train according to the first embodiment of the present invention illustrated in FIG. 2. The car 1c is equipped with a power generator 24a, a speed detector 40a, an AC/DC converter 25a, a system control unit 8c, and an information control unit 9c. The power generator 24a is driven by the power of an engine or the like not shown, and generates a three phase alternating power. The speed detector 40a is connected to a rotation shaft so as to detect the rotational speed of the power generator 24a. The AC/DC converter unit 25a converts the three phase alternating power generated by the power generator 24a into DC power and supplies the same to the power transmission means 7c.

A line breaker 16g is arranged on the DC link connecting the power transmission means 7c and the converter circuit 41a at a side close to the power transmission means 7c, and functions to disconnect the power supply from the power transmission means 7c to the DC link. Further, the line breaker 16h is disposed at a side close to the converter circuit 41a of the DC link. A charge resistor 18c connected in parallel to the line breaker 16h functions to prevent current from flowing in drastically when the filter condenser 19c connected in parallel to the input end of the converter circuit 41a is charged via the DC power supplied from the power transmission means 7c.

The converter circuit 41 converts the three phase alternating power generated in the power generator 24 to DC power by controlling a switching device not shown based on a switching signal GPcnv output from a converter control unit 42. Further, a voltage detector 20g for measuring the supplied voltage from the power supply means 7c, a current detector 21e for measuring the supplied current, a voltage detector 20h for measuring the inter-terminal voltage of the filter condenser 19c, and a current detector 21f for measuring the current of each phase of the three phase alternating power generated by the power generator 24 are arranged.

The system control unit 8c can be connected to the AC/DC converter unit 25 and an engine 23 not shown, respectively providing control demands Dcnv_c and Deng_c to each unit, and aggregating the status information Scnv_c and Seng_c of the respective units. Further, the system control unit 8c sends the information Dinf_c received from the AC/DC converter unit 25a and the engine 23a not shown to the information control unit 9c, where the information control unit 9c can share the information with information control units 9a and 9b of other cars within the train set via information transmission means 10c. In other words, the overall information of the train can be collected at the information control unit 9c, and the system control unit 8c selects and receives the necessary information Sinf_c for controlling the AC/DC converter unit 25 and the engine 23 not shown.

The car 1a is equipped with couplers 12a and 12b for electric power transfer to connect the power transmission means 7a with other cars within the train set, and couplers 13a and 13b for information transfer to connect the information transmission means 10a with other cars within the train set. The car 1b is equipped with couplers 12c and 12d for electric power transfer to connect the power transmission means 7b with other cars within the train set, and couplers 13c and 13d for information transfer to connect the information transmission means 10b with other cars within the train set. The car 1c is equipped with a coupler 12e for electric power transfer to connect the power transmission means 7c with other cars within the train set, and a coupler 13e for information transfer to connect the information transmission means 10c with other cars within the train set.

As described, according to the present configuration, the status information such as types, states of deterioration, power storage quantities and temperatures of the power storage systems 6a and 6b can be shared via the system control units 8a, 8b and 8c and the information control units 9a, 9b and 9c. Based on this shared information, it becomes possible to control the charge-discharge current of the power storage systems 6a and 6b controlled via the DC/DC converter units 5a and 5b, and to control the power generation current controlled via the AC/DC converter unit 25. In other words, the present invention provides a series hybrid system of a train set capable of individually controlling the current being charged and discharged in the respective power storage systems mounted in a dispersed manner in multiple cars, thereby providing a driving system for rail vehicles in which the replacement periods of the power storage systems become equal and long, even when the properties such as the types, the ages and the power storage capacities of the means of energy storage constituting the power storage systems differ.

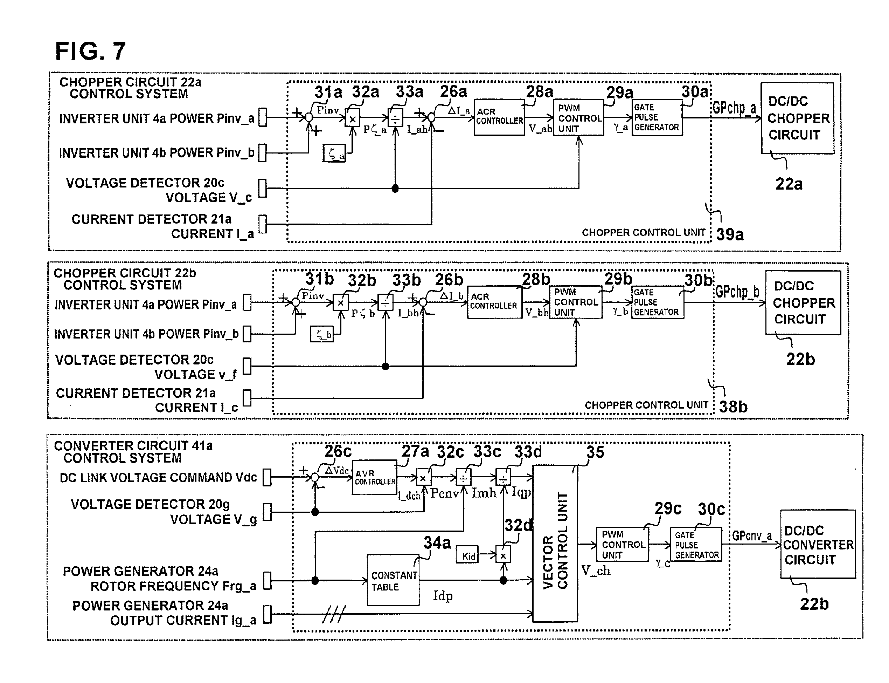

FIG. 7 is a view showing the device control system in the driving system of the electric train according to the second embodiment of the present invention. First, we will describe the control system of the chopper circuit 22a. The chopper circuit 22a realizes a "charge-discharge control with APR function" for controlling the charge-discharge power of the power storage system 6a according to the consumption power of the inverter units 4a and 4b. A total consumption power Pinv of the inverter units 4a and 4b is computed by adding a power Pinv_a of the inverter unit 4a and a power Pinv_b of the inverter unit 4b in an adder 31a. By multiplying the total consumption power Pinv by a power burden ratio ζ_a of the inverter unit 4a in a multiplier 32a, a conversion power Pζ_a to be borne by the chopper circuit 22a is computed.

Here, the power burden ratio ζ_a is computed by the following equation based on a deterioration index SOH_b of the power storage system computed by the information from the power storage system 6b and a deterioration index SOH_a of the power storage system computed by the information from the power storage system 6b.

$$\zeta\_a\ =\ (1-SOH\_a)/(SOH\_a\ +\ SOH\_b)$$

That is, by assigning the charge-discharge powers of the power storage systems 6a and 6b so as to suppress the charge-discharge power of the power storage system having a higher deterioration level based on deterioration indexes SOH_a and SOH_b, the power storage systems are controlled so that the deterioration degrees thereof eventually become equal.

A current command I_ah to be conducted to the low-pressure-side of the chopper circuit 22a is computed by dividing a conversion power P ζ_a to be borne by the chopper circuit 22a by the voltage V_c of the voltage detector 20c in a divider 33. A current difference ΔI_a is computed by subtracting the current command I_ah and the current I_a of the current detector 21a in a subtractor 26a. The ACR controller 28a receives the aforementioned current difference ΔI_a as input, and computes a voltage command V_ch for regulating the low-pressure-side voltage of the chopper circuit 22a necessary to converge the current difference to zero. A PWM control unit 29a receives the aforementioned voltage command V_ch and the voltage V_b of the voltage detector 20b as input, and computes a conduction ratio γ_a for driving the chopper circuit. A gate pulse generator 30a receives the conduction ratio γ-a as input and computes a corresponding gate pulse GPchp_a to drive the chopper circuit 22b.

Next, we will describe the control system of the chopper circuit 22b. The chopper circuit 22b realizes a "charge-discharge control with APR function" for controlling the charge-discharge power of the power storage system 6b according to the consumption power of the inverter units 4a and 4b. A total consumption power Pinv of the inverter units 4a and 4b is computed by adding a power Pinv_a of the inverter unit 4a and a power Pinv_b of the inverter unit 4b in an adder 31a. By multiplying the total consumption power Pinv by a power burden ratio ζ_b of the inverter unit 4b in a multiplier 32B, a conversion power Pζ_b to be borne by the chopper circuit 22b is obtained.

Here, the power burden ratio ζ_b is computed by the following equation based on a deterioration index SOH_a of the power storage system computed by the information from the power storage system 6a and a deterioration index SOH_b of the power storage system computed by the information from the power storage system 6b.

$$\zeta\_b = (1-SOH\_b)/(SOH\_a + SOH\_b)$$

That is, by assigning the charge-discharge powers of the power storage systems 6a and 6b so as to suppress the charge-discharge power of the power storage system having a higher deterioration degree based on deterioration indexes SOH_a and SOH_b, the power storage systems are controlled so that the deterioration degrees thereof eventually become equal.

A current command I_ch to be conducted to the low-pressure-side of the chopper circuit 22b is computed by dividing a conversion power Pζ_b to be borne by the chopper circuit 22b by the voltage V_f of the voltage detector 20f in a divider 33b. A current difference ΔI_c is computed by subtracting the current command I_ch and the current I_c of the current detector 21c in a subtractor 26b. The ACR controller 28b receives the aforementioned current difference ΔI_c as input, and computes a voltage command V_ch for regulating the low-pressure-side voltage of the chopper circuit 22b necessary to converge the current difference to zero. A PWM control unit 29b receives the aforementioned voltage command V_ch and the voltage V_c of the voltage detector 20c as input, and computes a conduction ratio γ_b for driving the chopper circuit. Agate pulse generator 30b receives the conduction ratio γ_b as input and computes a corresponding gate pulse Gpchp_b so as to drive the chopper circuit 22b.

Next, we will describe the method for controlling the converter circuit 41. The converter circuit 41 realizes a "charging and discharging control with AVR function" for controlling the power generation of the power generator 24 so that a DC link voltage, that is, the voltage between both ends of a filter condenser 19c, follows the DC link voltage command Vdc. The DC link voltage command Vdc is determined by the system control unit 8c, and transmitted as an information on the control demand Dcnv for the converter control unit 42 from the system control unit 8c. A voltage difference ΔVdc is computed by subtracting the DC link voltage command Vdc and the voltage V_g of the voltage detector 20g in a subtractor 26c.

An AVR controller 27 receives the aforementioned voltage difference ΔVdc as input, and computes a current command I_dch to be output by the converter circuit 41 so as to converge the voltage difference to zero. A multiplier 32c multiples the aforementioned current command I_dch by the voltage detector 20g to compute the output command Pcnv of the converter circuit 41. A divider 33c divides the output command Pcnv of the converter circuit 41 by the rotor frequency Frg of the power generator 24 to compute the command value Imh of the AC current effective value of the converter circuit 41. A constant table 34 receives the power generator 24 rotor frequency Frg as input and computes an excitation current command Idp. A constant gain Kid is multiplied to the excitation current command Idp in a multiplier 32d, and by dividing a command value Imh of the AC effective value of the converter circuit 41 in a divider 33d, a torque current reference Iqp is computed. A vector control unit 35 receives input of the aforementioned torque current reference Iqp, the excitation current command Idp, and the power generator 24a output current Ig, and outputs a voltage command value V_ch for regulating the AC-side voltage of the converter circuit 22c. The PWM control unit 29c receives input of the aforementioned voltage command V_ch, and computes a modulation factor γ_c for driving the converter circuit. A gate pulse generator 30c receives input of the modulation factor γ_c, computes a corresponding gate pulse GPchp_c and drives the converter circuit 41.

As described, according to the present configuration, the converter circuit 41 performs control of the power generation of the power generator 24 so that the DC link voltage or voltage between both ends of the filter condenser 19c follows the CD section voltage command Vdc, and on the other hand, the chopper circuits 22a and 22b control the charge-discharge power of the power storage systems 6a and 6b according to the consumption powers Pinv_a and Pinv_b of the inverter units 4a and 4b. Here, the charge-discharge power of the power storage system 6a and the charge-discharge power of the power storage system 6b can be respectively controlled according to the types, the states of deterioration, the power storage quantities, the temperatures and the like of the power storage systems 6a and 6b.

In other words, the present invention provides a series hybrid system of a train set capable of individually controlling the current being charged and discharged in the respective power storage systems mounted in a dispersed manner to multiple cars, thereby providing a driving system for rail vehicles in which the replacement periods of the power storage devices become equal and long, even when the properties such as the types, the ages and the power storage capacities of the means of energy storage constituting the power storage systems differ.

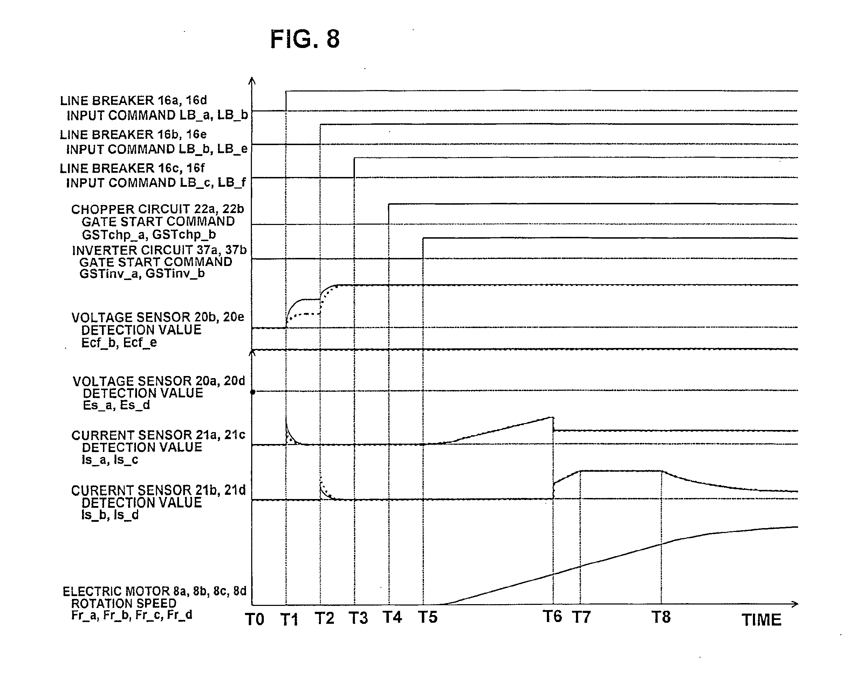

FIG. 8 is a view showing the control operation of a driving system of an electric train according to a second preferred embodiment of the present invention. In FIG. 8, the horizontal axis shows time, and the vertical axis shows the behavior of respective signals of input commands LB_a, LB_b, LB_c, LB_d, LB_e and LB_f of line breakers 16a, 16b, 16c, 16d, 16e and 16f, gate start commands GSTchp_a, GSTchp_b of chopper circuits 22a and 22b, gate start commands GSTinv_a and GSTinv_b of inverter circuits 37a and 37b, detected vluesEs_a, Es_b, Es_c and Es_d of voltage sensors 20a, 20b, 20c and 20d, detected values Is_a, Is_b, Is_c and Is_d of current sensors 21a, 21b, 21c and 21d, and rotational speeds Fr_a, Fr_b, Fr_c and Fr_dof electric motors 8a, 8b, 8c and 8d.

At time T0, the car is at a stopped state. At this time, the voltage values of detected values Ecf_b and Ecf_e of voltage sensors 20b and 20e corresponding to the high-voltage-side voltage of chopper circuits 22a and 22b are also zero. On the other hand, at time T0, the power generated by the engine 23a and the power generator 24a are supplied via the power transmission means 7a, 7b and 7c. Further, the engine 23a and the power generator 24a are controlled so that the detection value Es_g of the voltage detector 20g follows a predetermined target voltage value. Therefore, they are connected to the voltage detector 20g via the power transmission means 7a, 7b and 7c. The detected values Es_a and Es_d of voltage sensors 20a and 20d are also transited at a substantially equivalent value as the detection value Es_g of the voltage detector 20g.

At time T1, the line breaker 16a input command LB_a and the line breaker 16d input command LB_d are set to "1". Thereby, the line breakers 16a and 16d are input, and power is supplied from the power storage system 6a to the chopper circuit 22a and from the power storage system 6d to the chopper circuit 22b. Now, the output voltage of the power storage systems 6a and 6b are greater than both end voltages of filter condensers 19a and 19b. Therefore, the filter condenser 19a is charged via a charge resistor 18a until the output voltage of the power storage system 6a becomes equal to the voltage of the filter condenser 19a, and the filter condenser 19b is charged via a charge resistor 18b until the output voltage of the power storage system 6b becomes equal to the voltage of the filter condenser 19b.

FIG. 8 illustrates a case where the output voltage of the power storage system 6a becomes greater than the output voltage of the power storage system 6b due to reasons such as the power storage quantity of the power storage system 6a being greater than the power storage quantity of the power storage system 6b. At this time, the voltage value Ecf_a (solid line) after charging the filter condenser 19a is greater than the voltage value Ecf_e (dashed line) after charging the filter condenser 19b. Further, the current Is_a (dashed line) flowing in the current sensor 21a during the process of charging the filter condenser 19a is greater than the current Is_c (solid line) flowing in the current sensor 21c during the process of charging the filter condenser 19b.

At time T2, the line breaker 16b input command LB_b and the line breaker 16e input command LB_e are set to "1". Thereby, the line breakers 16b and 16e are input, and the DC link connecting the chopper circuit 22a and the inverter circuit 37a and the DC link connecting the chopper circuit 22b and the inverter circuit 37b are connected via the power transmission means 7a and the power transmission means 7b, respectively. As described, the voltage values of power transmission means 7a, 7b and 7c are controlled to follow the target voltage value via the engine 23a and the power generator 24a. Therefore, when the line breakers 16b and 16e are input, power is supplied from the power transmission means 7a, 7b and 7c until the detected values Ecf_b and Ecf_e of the voltage detectors 20b and 20e which are the voltages between both ends of the filter condensers 19a and 19b become equal to the detected values Es_a and Es_b of the voltage detectors 20a and 20d, so that currents Is_b and Is_d flow through the current sensors 21b and 21d.

At time T3, the line breaker 16c input command LB_c and the line breaker 16f input command LB_f are set to "1". Thereby, the line breakers 16c and 16f are input. At this time, since the line breakers 16c and 16f are input when no current is flowing to the charge resistors 18a and 18b respectively connected in parallel to the line breakers 16c and 16f, the current quantity of each section will not be changed by the input of line breakers 16c and 16f.

At time T4, the gate start commands GSTchp_a and GSTchp_b of chopper circuits 22a and 22b are set to "1". Thereby, the chopper circuit 22a starts a pressure-rise chopping operation, and the voltage value Ecf_b of the DC link connecting the chopper circuit 22a and the inverter circuit 37a is controlled so that the power flowing from the chopper circuit 22a to the DC link follows a predetermined target voltage value. Similarly, the chopper circuit 22b also starts a pressure-rise chopping operation, and the power flowing into the DC link from the chopper circuit 22b is controlled to follow a predetermined target power value corresponding to the voltage value Ecf_e of the DC link connecting the chopper circuit 22b and the inverter circuit 37b.

At time T5, the gate start command GSTchp_a and GSTchp_b of the inverter units 37a and 37b are set to "1". Thereby, the electric motors 8a, 8b, 8c and 8d start to rotate, and the rotational speeds Fr_a, Fr_b, Fr_c and Fr_d start to increase.

At time T6, a state is shown where discharge power is restricted since the power storage quantity of the power storage systems 6a and 6b is reduced to a predetermined value. At this time, since the detected value Is_b of the voltage sensor 21b, which is a current flowing into the DC link connecting the chopper circuit 22a and the inverter circuit 37a via the power transmission means 7a from the generated power of the engine 23a and the power generator 24a, and the detected value Is_d of the voltage sensor 21d, which is a current flowing into the DC link connecting the chopper circuit 22b and the inverter circuit 37b from the power transmission means 7b, are supplied to correspond to the discharge power restricted by the power storage systems 6a and 6b, the electric motors 8a, 8b, 8c and 8d continue to accelerate while maintaining a predetermined torque performance even after the elapse of a constant torque section terminal speed V7 (time T7) and a constant power section terminal speed V8 (time T8).

[Embodiment 3]

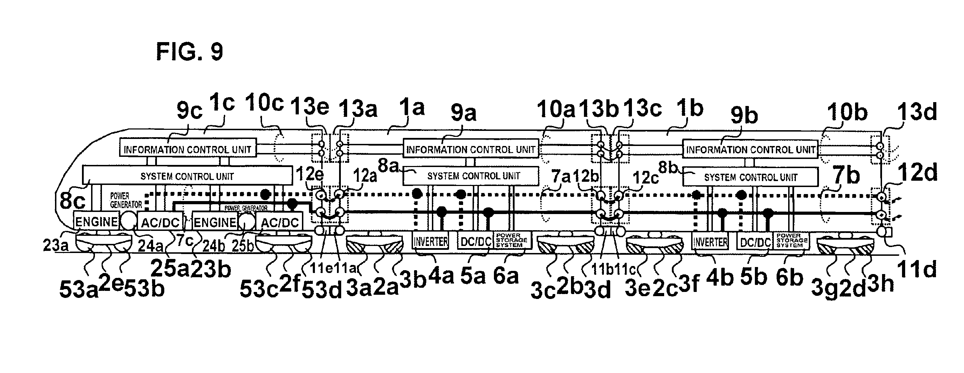

FIG. 9 is a view showing the configuration of a driving system of an electric train according to a third embodiment of the present invention. Cars 1a, 1b and 1c are a portion of the cars constituting a train set. Car 1a is equipped with inter-car couplers 11a and 11b, car 1b is equipped with inter-car couplers 11c and 11d, and car 1c is equipped with an inter-car coupler 11e, wherein cars 1a and 1b are connected to each other via inter-car coupler 11b and inter-car coupler 11c, and cars 1a and 1c are connected via inter-car coupler 11a and inter-car coupler 11e.

Car 1a is supported on a rail surface not shown via a truck 2a and wheel sets 3a and 3b, and via a truck 2b and wheel sets 3c and 3d. Similarly, car 1b is supported on a rail surface not shown via a truck 2c and wheel sets 3e and 3f, and via a truck 2d and wheel sets 3g and 3h. Further, car 1c is supported on a rail surface not shown via a truck 2e and wheel sets 53a and 53b, and via a truck 2f and wheel sets 53c and 53d.

At first, we will describe the configuration of car 1a. Car 1a has arranged therein an inverter unit 4a, a DC/DC converter 5a, a power storage system 6a, a system control unit 8a, and an information control unit 9a. The inverter unit 4a receives DC power supplied from a power transmission means 7a, converts the same into three phase alternating power, and drives an electric motor 36 not shown. The output of the electric motor 36 is transferred via a power transmission means not shown to drive any or all of the wheel sets 3a, 3b, 3c and 3d to provide accelerating and decelerating force to the car 1a.

The DC/DC converter unit 5a has a function to enable conduction of current according to the respective input-side and output-side terminal voltages, when the terminal voltages of the input-side and output-side terminals differ. In the present embodiment, the high-voltage-side terminal is connected to the power transmission means 7a, and the low-voltage-side terminal is connected to the power storage system 6a. In other words, the DC/DC converter unit 5a can charge power from the power transmission means 7a to the power storage system 6a, or discharge the power storage system 6a and return the power to the power transmission means 7a.

The system control unit 8a can be connected to the inverter unit 4a, the DC/DC converter unit 5a and the power storage system 6a, respectively providing control demands Dinv_a, Dchp_a and Dbtr_a to each unit, and aggregating the status information Sinv_a, Schp_a and Sbtr_a of the respective units. Further, the system control unit 8a sends the information Dinf_a received from the inverter unit 4a, the DC/DC converter unit 5a and the power storage system 6a to the information control unit 9a, and the information control unit 9a can share the information with information control units 9b of other cars within the train set via information transmission means 10a and 10b. In other words, the overall information of the train can be collected at the information control unit 9a, and the system control unit 8a selects and receives the necessary information Sinf_a for controlling the inverter unit 4a, the DC/DC converter unit 5a and the power storage system 6a.

Further, the car 1a is equipped with couplers 12a and 12b for electric power transfer to connect the power transmission means 7a with other cars within the train set, and couplers 13a and 13b for information transfer to connect the information transmission means 10a with other cars within the train set.

Next, we will describe the configuration of car 1b. Car 1b has arranged therein an inverter unit 4b, a DC/DC converter unit 5b, a power storage system 6b, a system control unit 8b, and an information control unit 9b. The inverter unit 4b receives DC power supplied via a power transmission means 7b, converts the same into three phase alternating power, and drives an electric motor 36 not shown. The output of the electric motor 36 is transferred via a power transmission means not shown to drive any or all of the wheel sets 3e, 3f, 3g and 3h to provide accelerating and decelerating force to the car 1b.

The DC/DC converter unit 5b has a function to enable conduction of current according to the respective input-side and output-side terminal voltages, when the terminal voltages of the input-side and output-side terminals differ. In this embodiment, the high-voltage-side terminal is connected to the power transmission means 7b, and the low-voltage-side terminal is connected to the power storage system 6b. In other words, the DC/DC converter unit 5b can charge the power of the power transmissionmeans 7b to the power storage system 6b, or discharge the power storage system 6b and return the power to the power transmission means 7b.

The system control unit 8b can be connected to the inverter unit 4b, the DC/DC converter unit 5b and the power storage system 6b, respectively providing control demands Dinv_b, Dchp_b and Dbtr_b to each unit, and aggregating the status information Sinv_b, Schp_b and Sbtr_b of the respective units. Further, the system control unit 8b sends the information Dinf_b received from the inverter unit 4b, the DC/DC converter unit 5b and the power storage system 6b to the information control unit 9b, and the information control unit 9b can share the information with information control units 9a of other cars within the train set via information transmission means 10a and 10b. In other words, the overall information of the train can be collected at the information control unit 9b, and the system control unit 8a selects and receives the necessary information Sinf_a for controlling the inverter unit 4a, the DC/DC converter unit 5b and the power storage system 6b.

Further, the car 1b is equipped with couplers 12c and 12d for electric power transfer to connect the power transmission means 7b with other cars within the train set, and couplers 13c and 13d for information transfer to connect the information transmission means 10b with other cars within the train set.

Next, we will describe the configuration of car 1c. Car 1c has arranged therein engines 23a and 23b, power generators 24a and 24b, AC/DC converters 25a and 25b, a system control unit 8c and an information control unit 9c. The power generator 24a is driven via the engine 23a to generate three phase alternating power. The three phase alternating power is converted into DC power via an AC/DC converter unit 25a, and transmitted to other cars 1a and 1b within the train set via a power transmission means 7c. Similarly, the power generator 24b is driven via the engine 23b to generate three phase alternating power. The three phase alternating power is converted into DC power via an AC/DC converter unit 25b, and transmitted to other cars 1a and 1b within the train set via a power transmission means 7c. In other words, the DC power output of the AC/DC converter unit 25a and the DC power output of the AC/DC converter unit 25b are connected to the same power transmission means 7c, and the total electric power of the power generated via the engine 23a and the power generator 24a, and the power generated via the engine 23b and the power generator 24b can be supplied via the power transmission means 7c to other cars 1a and 1b within the train set.

The system control unit 8c can be connected to the engine 23a and the AC/DC converter unit 25a, respectively providing control demands Deng_a and Dcnv_a to each unit, and aggregating the status information Seng_a and Scnv_a of the respective units. Further, the system control unit 8c is connected to the engine 23b and the AC/DC converter unit 25b, respectively providing control demands Deng_b and Dcnv_b to each unit, and aggregating the status information Seng_b and Scnv_b of the respective units.

Further, the system control unit 8c sends the information Dinf_a received from the engine 23a and the AC/DC converter unit 25a to the information control unit 9c. Similarly, the system control unit 8c sends the information Dinf_b received from the engine 23b and the AC/DC converter unit 25b to the information control unit 9c. The information control unit 9c can share information with information control units 9a and 9b of other cars within the train set via information transmission means 10c. In other words, the overall information of the whole train can be collected at the information control unit 9c, and the system control units 8c and 8d select and receive the necessary information Scnv_a and Scnv_b for controlling the engines 23a and 23b and the AC/DC converter units 25a and 25b. Further, the car 1c is equipped with a coupler 12e for electric power transfer to connect the power transmission means 7a with other cars within the train set, and a coupler 13e for information transfer to connect the information transmission means 10c with other cars within the train set.

The present embodiment illustrates a configuration where two engines 23, two power generators 24 and two AC/DC converter units 25 are provided on the car 1c, and DC power is supplied via a power transmission means. However, the number of engines 23, power generators 24 and AC/DC converter units 25 are not restricted in the present invention. By providing more than three engines 23, power generators 24 and AC/DC converter units 25, it becomes possible to improve the redundancy when failure occurs to these equipments.

As described, according to the present configuration, the status information such as type, state of deterioration, power storage quantity and temperature of the power storage systems 6a and 6b can be shared by the system control units 8a, 8b and 8c and the information control units 9a, 9b and 9c. Based on this shared information, it becomes possible to control the charge-discharge current of the power storage systems 6a and 6b controlled via the DC/DC converter units 5a and 5b, and the power generation current controlled via the AC/DC converter units 25a and 25b. In other words, the present invention provides a series hybrid system of a train set capable of individually controlling the current being charged and discharged in the respective power storage systems mounted in a dispersed manner to multiple cars, thereby providing a driving system for rail vehicles in which the replacement periods of the power storage devices become equal and long, even when the properties such as the types, the ages and the power storage capacities of the means of energy storage constituting the power storage systems differ.

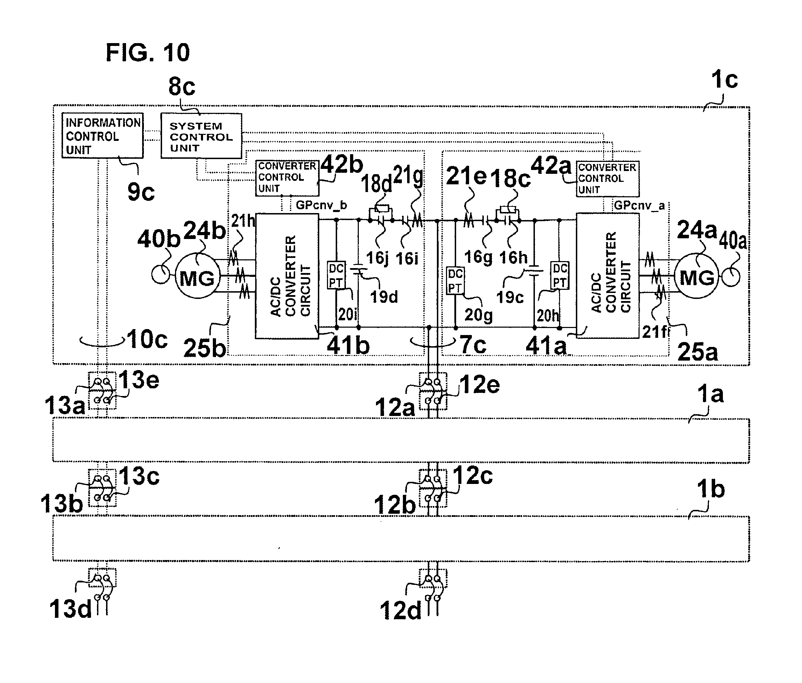

FIG. 10 is a view showing the details of the configuration of a driving system of an electric train according to the third embodiment of the present invention. Cars 1a, 1b and 1c are portions of the cars constituting the train set. The configurations of cars 1a and 1b are omitted from the present drawing since they are the same as those illustrated in detail with respect to the configuration of the driving system of the electric train according to the first embodiment of the present invention illustrated in FIG. 2.

The car 1c is equipped with power generators 24a and 24b, speed detectors 40a and 40b, AC/DC converters 25a and 25b, a system control unit 8c, and an information control unit 9c.

The power generator 24a is driven by the power of an engine or the like not shown, and generates a three phase alternating power. The speed detector 40a is connected to a rotation shaft so as to detect the rotational speed of the power generator 24a. The AC/DC converter unit 25a converts the three phase alternating power generated by the power generator 24a into DC power and supplies the same to the power transmission means 7c.

A line breaker 16g is arranged on the DC link connecting the power transmission means 7c and the converter circuit 41a at a side close to the power transmission means 7c, and functions to disconnect the power supply from the power transmission means 7c to the DC link. Further, the line breaker 16h is disposed at a side close to the converter circuit 41a of the DC link. A charge resistor 18c connected in parallel to the line breaker 16h functions to prevent current from flowing in drastically when the filter condenser 19c connected in parallel to the input end of the converter circuit 41a is charged via the DC power supplied from the power transmission means 7c.

The converter circuit 41a converts the three phase alternating power generated in the power generator 24a to DC power by controlling a switching device not shown based on a switching signal GPcnv_a output from a converter control unit 42a. Further, a voltage detector 20g for measuring the supplied voltage from the power supply means 7c, a current detector 21e for measuring the supplied current, a voltage detector 20h for measuring the inter-terminal voltage of the filter condenser 19c, and a current detector 21f for measuring the current of each phase of the three phase alternating power generated by the power generator 24 are arranged.

The power generator 24b is driven by the power of an engine or the like not shown, and generates a three phase alternating power. The speed detector 40b is connected to a rotation shaft so as to detect the rotational speed of the power generator 24b. The AC/DC converter unit 25b converts the three phase alternating power generated by the power generator 24b into DC power and supplies the same to the power transmission means 7c.

A line breaker 16i is arranged on the DC link connecting the power transmission means 7c and the converter circuit 41b at a side close to the power transmission means 7c, and functions to disconnect the power supply from the power transmission means 7c to the DC link. Further, the line breaker 16j is disposed at a side close to the converter circuit 41b of the DC link. A charge resistor 18d connected in parallel to the line breaker 16j functions to prevent current from flowing in drastically when the filter condenser 19d connected in parallel to the input end of the converter circuit 41b is charged via the DC power supplied from the power transmission means 7c.

The converter circuit 41b converts the three phase alternating power generated in the power generator 24b to DC power by controlling a switching device not shown based on a switching signal GPcnv_b output from a converter control unit 42b. Further, a current detector 21g for measuring the supplied current from the power transmission unit 7c, a voltage detector 20i for measuring the inter-terminal voltage of the filter condenser 19d, and a current detector 21h for measuring the current of each phase of the three phase alternating power generated by the power generator 24 are arranged.

The system control unit 8c can be connected to the AC/DC converter units 25a, 25b and engines 23a, 23b not shown, respectively providing control demands Dcnv_a, Deng_a, Dcnv_b and Deng_b to each unit, and aggregating the status information Scnv_a, Seng_a, Scnv_b and Seng_b of the respective units. Further, the system control unit 8c sends the information Dinf_c received from the AC/DC converter units 25a, 25b and the engines 23a, 23b not shown to the information control unit 9c, and the information control unit 9c can share the information with information control units 9a and 9b of other cars within the train set via information transmission means 10c. In other words, the overall information of the train can be collected at the information control unit 9c, and the system control unit 8c selects and receives the necessary information Sinf_c for controlling the AC/DC converter units 25a, 25b and the engines 23a, 23b not shown.

The car 1a is equipped with couplers 12a and 12b for electric power transfer to connect the power transmission means 7a with other cars within the train set, and couplers 13a and 13b for information transfer to connect the information transmission means 10a with other cars within the train set. The car 1b is equipped with couplers 12c and 12d for electric power transfer to connect the power transmission means 7b with other cars within the train set, and couplers 13c and 13d for information transfer to connect the information transmission means 10b with other cars within the train set. The car 1c is equipped with a coupler 12e for electric power transfer to connect the power transmission means 7c with other cars within the train set, and a coupler 13e for information transfer to connect the information transmission means 10c with other cars within the train set.

As described, according to the present configuration, the status information such as types, states of deterioration, power storage quantities and temperatures of the power storage systems 6a and 6b can be shared via the system control units 8a, 8b and 8c and the information control units 9a, 9b and 9c. Based on this shared information, it becomes possible to control the charge-discharge current of the power storage systems 6a and 6b controlled via the DC/DC converter units 5a and 5b, and to control the power generation current controlled via the AC/DC converter units 25a and 25 b. In other words, the present invention provides a series hybrid system of a train set capable of individually controlling the current being charged and discharged in the respective power storage systems mounted in a dispersed manner in multiple cars, thereby providing a driving system for rail vehicles in which the replacement periods of the power storage device become equal and long even when the properties such as the types, the ages and the power storage capacities of the means of energy storage constituting the power storage systems differ.

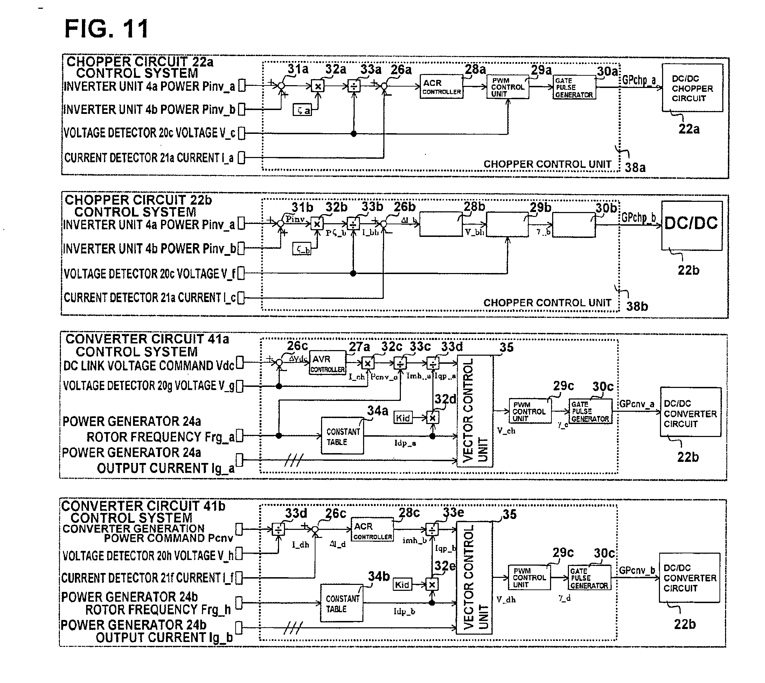

FIG. 11 is a view showing the device control system in the driving system of the electric train according to the third embodiment of the present invention. First, we will describe the control system of the chopper circuit 22a. The chopper circuit 22a realizes a "charge-discharge control with APR function" for controlling the charge-discharge power of the power storage system 6a according to the consumption power of the inverter units 4a and 4b.

A total consumption power Pinv of the inverter units 4a and 4b is computed by adding a power Pinv_a of the inverter unit 4a and a power Pinv_b of the inverter unit 4b in an adder 31a. By multiplying the total consumption power Pinv by a power burden ratio $\zeta$-a of the inverter unit 4a in a multiplier 32a, a conversion power $P\zeta$_a to be borne by the chopper circuit 22a is computed.

Here, the power burden ratio ζ_a is computed by the following equation based on a deterioration index SOH_ a of the power storage system computed by the information from the power storage system 6a and a deterioration index SOH_b of the power storage system computed by the information from the power storage system 6b.

$$\zeta\_a = (1-SOH\_a)/(SOH\_a + SOH\_b)$$

That is, by assigning the charge-discharge powers of the power storage systems 6a and 6b so as to suppress the charge-discharge power of the power storage system having a higher deterioration degree based on deterioration indexes SOH_a and SOH_b, the power storage systems are controlled so that the deterioration degrees thereof eventually become equal.

A current command I_ah to be conducted to the low-pressure-side of the chopper circuit 22a is computed by dividing a conversion power P ζ_a to be borne by the chopper circuit 22a by the voltage V_c of the voltage detector 20c in a divider 33a. A current difference ΔI_a is computed by subtracting the current command I_ah and the current I_a of the current detector 21a in a subtractor 26a. The ACR controller 28a receives the aforementioned current difference ΔI_ a as input, and computes a voltage command V_ch for regulating the low-pressure-side voltage of the chopper circuit 22a necessary to converge the current difference to zero. A PWM control unit 29a receives the aforementioned voltage command V_ch and the voltage V_b of the voltage detector 20b as input, and computes a conduction ratio γ_a for driving the chopper circuit. Agate pulse generator 30a receives the conduction ratio γ_a as input and computes a corresponding gate pulse GPchp_a to drive the chopper circuit 22b.

Next, we will describe the control system of the chopper circuit 22b. The chopper circuit 22b realizes a "charge-discharge control with APR function" for controlling the charge-discharge power of the power storage system 6b according to the consumption power of the inverter units 4a and 4b. A total consumption power Pinv of the inverter units 4a and 4b is computed by adding a power Pinv_a of the inverter unit 4a and a power Pinv_b of the inverter unit 4b in an adder 31a. By multiplying the total consumption power Pinv by a power burden ratio ζ_b of the inverter unit 4b in a multiplier 32B, a conversion power Pζ_b to be borne by the chopper circuit 22b is obtained.

Here, the power burden ratio ζ_b is computed by the following equation based on a deterioration index SOH_ a of the power storage system computed by the information from the power storage system 6a and a deterioration index SOH_b of the power storage system computed by the information from the power storage system 6b.

$$\zeta\_b = (1-SOH\_a)/(SOH\_a + SOH\_b)$$

That is, by assigning the charge-discharge powers of the power storage systems 6a and 6b so as to suppress the charge-discharge power of the power storage system having a higher deterioration degree based on deterioration indexes SOH_a and SOH_b, the power storage systems are controlled so that the deterioration degrees thereof eventually become equal.

A current command I_ch to be conducted to the low-pressure-side of the chopper circuit 22b is computed by dividing a conversionpower Pζ_b to be borne by the chopper circuit 22b by the voltage V_f of the voltage detector 20f in a divider 33b. A current difference ΔI_c is computed by subtracting the current command I_ch and the current I_c of the current detector 21c in a subtractor 26b. The ACR controller 28b receives the aforementioned current difference ΔI_ c as input, and computes a voltage command V_ch for regulating the low-pressure-side voltage of the chopper circuit 22b necessary to converge the current difference to zero. A PWM control unit 29b receives the aforementioned voltage command V_ch and the voltage V_c of the voltage detector 20c as input, and computes a conduction ratio γ_b for driving the chopper circuit. A gate pulse generator 30b receives the conduction ratio γ_b as input and computes a corresponding gate pulse GPchp_b to drive the chopper circuit 22b.

Next, we will describe the method for controlling the converter circuit 41a. The converter circuit 41a realizes a "charging and discharging control with AVR function" for controlling the power generation of the power generator 24 so that a DC link voltage, that is, the voltage between both ends of a filter condenser 19c, follows the DC link voltage command Vdc. The DC link voltage command Vdc is determined by the system control unit 8c, and transmitted as an information on the control demand Dcnv_a for the converter control unit 42 from the system control unit 8c. A voltage difference ΔVdc is computed by subtracting the DC link voltage command Vdc and the voltage V_g of the voltage detector 20g in a subtractor 26c.

An AVR controller 27a receives the aforementioned voltage difference ΔVdc as input, and computes a current command I_ch to be output by the converter circuit 41 so as to converge the voltage difference to zero. A multiplier 32c multiples the aforementioned current command I_ch by the voltage detector 20g to compute the output command Pcnv_a of the converter circuit 41. A divider 33c divides the output command Pcnv_a of the converter circuit 41 by the rotor frequency Frg_a of the power generator 24a to compute the command value Imh_a of the AC current effective value of the converter circuit 41. A constant table 34a receives the power generator 24a rotor frequency Frg_a as input and computes an excitation current command Idp_a. A constant gain Kid is multiplied by the excitation current command Idp_a in a multiplier 32d, and by dividing a command value Imh_a of the AC effective value of the converter circuit 41a by the excitation current command Idp_a in a divider 33d, a torque current reference Iqp_a is computed. A vector control unit 35a receives input of the aforementioned torque current reference Iqp_a, the excitation current command Idp_a, and the power generator 24a output current Ig_a, and outputs a voltage command value V_ch for regulating the AC-side voltage of the converter circuit 41a. The PWM control unit 29c receives input of the aforementioned voltage command V_ch, and computes a modulation factor γ_c for driving the converter circuit. A gate pulse generator 30c receives input of the modulation factor γ_c, computes a corresponding gate pulse GPchp_c and drives the converter circuit 41a.

Next, we will describe the method for controlling the converter circuit 41b. The converter circuit 41b realizes a "constant power generation control" for controlling the power generation of the power generator 24 according to the converter generation power command Pcnv. A divider 33d divides the converter generation power command Pcnv by the voltage detector 20h voltage Vh to compute the converter generation current command I_dh. A subtractor 26c subtracts a current I_f of the current detector 21f from the converter generation current command I_dh to compute a current difference ΔI_d. An ACR controller 28c receives input of the aforementioned current difference ΔIdc, and computes a command value Imh_b of the AC effective value of the converter circuit 41b to be output from the converter circuit 41b to converge the current difference to zero. A constant table 34b receives input of the power generator 24b rotor frequency Frg_b and computes an excitation current command Idp_b. A constant gain Kid is multiplied to the excitation current command Idp_b in a multiplier 32e, and by dividing a command value Imh_b of the AC effective value of the converter circuit 41b by the excitation current command Idp_b in a divider 33d, a torque current reference Iqp_b is computed. A vector control unit 35b receives input of the aforementioned torque current reference Iqp_b, the excitation current command Idp_b and the power generator 24b output current Ig_b, and outputs a voltage command value V_dh for regulating the AC-side voltage of the converter circuit 41b. The PWM control unit 29d receives input of the aforementioned voltage command V_dh, and computes a modulation factor γ_d for driving the converter circuit 41b. A gate pulse generator 30d receives input of the modulation factor γ_d, computes a corresponding gate pulse GPchp_d and drives the converter circuit 41d.

As described, according to the present configuration, the converter circuit 41a performs control of the power generation of the power generator 24 so that the DC link voltage or voltage between both ends of the filter condenser 19c follows the DC link voltage command Vdc, and the converter circuit 41b performs control of the power generation of the power generator 24 according to the converter generation power command Pcnv, while on the other hand, the chopper circuits 22a and 22b control the charge-discharge power of the power storage systems 6a and 6b according to the consumption powers Pinv_a and Pinv_b of the inverter units 4a and 4b. Here, the charge-discharge power of the power storage system 6a and the charge-discharge power of the power storage system 6b can be respectively controlled according to the types, the states of deterioration, the power storage quantities, the temperatures and the like of the power storage systems 6a and 6b.

In other words, the present invention provides a series hybrid system of a train set capable of individually controlling the current being charged and discharged in the respective power storage systems mounted in a dispersed manner to multiple cars, thereby providing a driving system for rail vehicles in which the replacement periods of the power storage devices becomes equal and long even when the properties such as the types, the ages and the power storage capacities of the means of energy storage constituting the power storage systems differ.

**Claims**

1.  A driving system for rail vehicles in which a plurality of cars are connected, wherein at least two cars out of the plurality of cars comprise a power storage means having a function to charge and discharge electric power; a first electric power conversion means having a function to control a current flow rate of a DC power having a first voltage level being charged and discharged via the power storage means; a second electric power conversion means for converting a DC power having the current flow rate thereof controlled via the first electric power conversion means and having a second voltage level to AC power; a electric power generator for driving the railway car based on the AC power; a electric power transmission means for sharing the DC power having the second voltage level among cars; a system controlmeans for controlling the first electricpower conversion means and the second electric power conversion means; and an information control means for mutually receiving control information among system control means of respective cars.

2.  The driving system for rail vehicles according to claim 1, wherein

out of a plurality of first electric power conversion means at least mounted on two cars out of the plurality of cars, one specific electric power conversion means performs control of the DC power having the second voltage level connected thereto via the electric power transmission means so that the voltage value follows a predetermined target value.

3. The driving system for rail vehicles according to claim 2, wherein
the electric power conversion means that is not the specific electric power conversion means performs control of the charge and discharge power of the power storage means based on the status information of the power storage means received from the information control means.

4. The driving system for rail vehicles according to claim 1, further comprising at least one or more third electric power conversion means on at least two cars out of the plurality of cars connected via the electric power transmission means and a power transmission coupling means and capable of additionally supplying electric power to the DC power having the second voltage level.

5. The driving system for rail vehicles according to claim 4, wherein
out of a plurality of first electric power conversion means or a third electric power conversion means mounted at least on two cars out of the plurality of cars, one specific electric power conversion means performs control of the DC power having the second voltage level connected via the electric power transmission means so that the voltage value follows a predetermined target value.

6. The driving system for rail vehicles according to claim 5, wherein
the electric power conversion means that is not the specific electric power conversion means performs control of the charge and discharge power of the power storage means according to the status information of the power storage means received from the information control means.

7. The driving system for rail vehicles according to any one of claims 4 through 6, wherein
the third power conversion means has a function to convert AC power generated in a power generator means to DC power.

8. The driving system for rail vehicles according to any one of claims 4 through 6, wherein
a plurality of the third power conversion means is provided, each having a function to convert AC power generated in a power generator means to DC power.

FIG. 1

EP 2 127 935 A2

# FIG. 2

EP 2 127 935 A2

# FIG. 3

**CHOPPER CIRCUIT 22a CONTROL SYSTEM**

- DC LINK VOLTAGE COMMAND Vdc
- VOLTAGE DETECTOR 20b — VOLTAGE V_b
- CURRENT DETECTOR 21a — CURRENT I_a
- VOLTAGE DETECTOR 20c — VOLTAGE V_c

26a → △Vdc → AVR CONTROLLER (27) → I_ah → 26b → −△I_a → ACR CONTROLLER (28a) → V_ah → PWM CONTROL UNIT (29a) → γ_a → GATE PULSE GENERATOR (30a) → GPchp_a → DC/DC CHOPPER CIRCUIT 22a

CHOPPER CONTROL UNIT 39a

**CHOPPER CIRCUIT 22b CONTROL SYSTEM**

- INVERTER UNIT 4a POWER Pinv_a
- INVERTER UNIT 4b POWER Pinv_b
- VOLTAGE DETECTOR 20f — VOLTAGE V_f
- CURRENT DETECTOR 21c — CURRENT I_c

31a → Pinv → 32 × → Pζ_b → 33 ÷ → I_bh → △I_b → 26b → ACR CONTROLLER (28b) → V_bh → PWM CONTROL UNIT (29b) → γ_b → GATE PULSE GENERATOR (30b) → GPchp_b → DC/DC CHOPPER CIRCUIT 22b

ζ_b

CHOPPER CONTROL UNIT 39b

EP 2 127 935 A2

## FIG. 4

LINE BREAKER 16a, 16d
 INPUT COMMAND LB_a, LB_b

LINE BREAKER 16b, 16e
 INPUT COMMAND LB_b, LB_e

LINE BREAKER 16c, 16f
 INPUT COMMAND LB_c, LB_f

CHOPPER CIRCUIT 22a, 22b
 GATE START COMMAND
 GSTchp_a, GSTchp_b

INVERTER CIRCUIT 37a, 37b
 GATE START COMMAND
 GSTinv_a, GSTinv_b

VOLTAGE SENSOR 20b, 20e
 DETECTION VALUE
 Ecf_b, Ecf_e

VOLTAGE SENSOR 20a, 20d
 DETECTION VALUE
 Es_a, Es_d

CURRENT SENSOR 21a, 21c
 DETECTION VALUE
 Is_a, Is_c

CURERNT SENSOR 21b, 21d
 DETECTION VALUE
 Is_b, Is_d

ELECTRIC MOTOR 8a, 8b, 8c, 8d
 ROTATION SPEED
 Fr_a, Fr_b, Fr_c, Fr_d

T0  T1  T2  T3  T4  T5          T6 T7        T8          TIME

EP 2 127 935 A2

FIG. 5

INFORMATION CONTROL UNIT

SYSTEM CONTROL UNIT

POWER GENERATOR

ENGINE    AC/DC

INVERTER  DC/DC  POWER STORAGE SYSTEM

INFORMATION CONTROL UNIT

SYSTEM CONTROL UNIT

INVERTER  DC/DC  POWER STORAGE SYSTEM

INFORMATION CONTROL UNIT

SYSTEM CONTROL UNIT

FIG. 6

# FIG. 7

CHOPPER CIRCUIT 22a CONTROL SYSTEM

INVERTER UNIT 4a POWER Pinv_a

INVERTER UNIT 4b POWER Pinv_b

VOLTAGE DETECTOR 20c VOLTAGE V_c

CURRENT DETECTOR 21a CURRENT I_a

31a 32a 33a 26a 28a 29a 30a

Pinv × ÷ ΔI_a ACR CONTROLLER V_ah PWM CONTROL UNIT γ_a GATE PULSE GENERATOR GPchp_a

Pζ_a I_ah ζ_a

DC/DC CHOPPER CIRCUIT 22a

CHOPPER CONTROL UNIT 39a

CHOPPER CIRCUIT 22b CONTROL SYSTEM

INVERTER UNIT 4a POWER Pinv_a

INVERTER UNIT 4b POWER Pinv_b

VOLTAGE DETECTOR 20c VOLTAGE v_f

CURRENT DETECTOR 21a CURRENT I_c

31b 32b 33b 26b 28b 29b 30b

Pinv × ÷ ΔI_b ACR CONTROLLER V_bh PWM CONTROL UNIT γ_b GATE PULSE GENERATOR GPchp_b

Pζ b I_bh ζ_b

DC/DC CHOPPER CIRCUIT 22b

CHOPPER CONTROL UNIT 38b

CONVERTER CIRCUIT 41a CONTROL SYSTEM

DC LINK VOLTAGE COMMAND Vdc

VOLTAGE DETECTOR 20g VOLTAGE V_g

POWER GENERATOR 24a ROTOR FREQUENCY Frg_a

POWER GENERATOR 24a OUTPUT CURRENT Ig_a

26c 27a 32c 33c 33d 35

ΔVdc AVR CONTROLLER × ÷ ÷

I_dch Pcnv Imh Iqp

34a 32d

CONSTANT TABLE Kid ×

Idp

VECTOR CONTROL UNIT V_ch

29c 30c

PWM CONTROL UNIT γ_c GATE PULSE GENERATOR GPcnv_a

DC/DC CONVERTER CIRCUIT 22b

EP 2 127 935 A2

## FIG. 8

EP 2 127 935 A2

LINE BREAKER 16a, 16d
INPUT COMMAND LB_a, LB_b

LINE BREAKER 16b, 16e
INPUT COMMAND LB_b, LB_e

LINE BREAKER 16c, 16f
INPUT COMMAND LB_c, LB_f

CHOPPER CIRCUIT 22a, 22b
GATE START COMMAND
GSTchp_a, GSTchp_b

INVERTER CIRCUIT 37a, 37b
GATE START COMMAND
GSTinv_a, GSTinv_b

VOLTAGE SENSOR 20b, 20e
DETECTION VALUE
Ecf_b, Ecf_e

VOLTAGE SENSOR 20a, 20d
DETECTION VALUE
Es_a, Es_d

CURRENT SENSOR 21a, 21c
DETECTION VALUE
Is_a, Is_c

CURERNT SENSOR 21b, 21d
DETECTION VALUE
Is_b, Is_d

ELECTRIC MOTOR 8a, 8b, 8c, 8d
ROTATION SPEED
Fr_a, Fr_b, Fr_c, Fr_d

T0  T1  T2  T3  T4  T5          T6 T7        T8          TIME

FIG. 9

# FIG. 10

EP 2 127 935 A2

## FIG. 11

**CHOPPER CIRCUIT 22a CONTROL SYSTEM**
INVERTER UNIT 4a POWER Pinv_a
INVERTER UNIT 4b POWER Pinv_b
VOLTAGE DETECTOR 20c VOLTAGE V_c
CURRENT DETECTOR 21a CURRENT I_a

(31a, 32a, 33a, 26a, 28a ACR CONTROLLER, 29a PWM CONTROL UNIT, 30a GATE PULSE GENERATOR → GPchp_a → DC/DC CHOPPER CIRCUIT 22a)
CHOPPER CONTROL UNIT 38a

**CHOPPER CIRCUIT 22b CONTROL SYSTEM**
INVERTER UNIT 4a POWER Pinv_a
INVERTER UNIT 4b POWER Pinv_b
VOLTAGE DETECTOR 20c VOLTAGE V_f
CURRENT DETECTOR 21a CURRENT I_c

(31b, 32b, 33b, 26b, 28b, 29b, 30b GPchp_b → DC/DC 22b)
CHOPPER CONTROL UNIT 38b

**CONVERTER CIRCUIT 41a CONTROL SYSTEM**
DC LINK VOLTAGE COMMAND Vdc
VOLTAGE DETECTOR 20g VOLTAGE V_g
POWER GENERATOR 24a ROTOR FREQUENCY Frg_a
POWER GENERATOR 24a OUTPUT CURRENT Ig_a

(26c AVR CONTROLLER, 27a, 32c, 33c, 33d, 34a CONSTANT TABLE, 32d, 35 VECTOR CONTROL UNIT, 29c PWM CONTROL UNIT, 30c GATE PULSE GENERATOR → GPcnv_a → DC/DC CONVERTER CIRCUIT 22b)

**CONVERTER CIRCUIT 41b CONTROL SYSTEM**
CONVERTER GENERATION POWER COMMAND Pcnv
VOLTAGE DETECTOR 20h VOLTAGE V_h
CURRENT DETECTOR 21f CURRENT I_f
POWER GENERATOR 24b ROTOR FREQUENCY Frg_h
POWER GENERATOR 24b OUTPUT CURRENT Ig_b

(33d, 26c, 28c ACR CONTROLLER, 33e, 34b CONSTANT TABLE, 32e, 35 VECTOR CONTROL UNIT, 29c PWM CONTROL UNIT, 30c GATE PULSE GENERATOR → GPcnv_b → DC/DC CONVERTER CIRCUIT 22b)

30

# FIG. 12

**REFERENCES CITED IN THE DESCRIPTION**

**Patent documents cited in the description**

- JP 2005027447 A